# EUROPEAN PATENT APPLICATION

(11) **EP 3 757 550 A1**
(43) Date of publication of application: **30.12.2020**
(21) Application number: 18896711.1
(22) Date of filing: 27.12.2018
(51) Int. Cl.: G01N 21/64, G02B 21/06, G02B 21/36

(54) **SPECTROSCOPIC ANALYSIS DEVICE, SPECTROSCOPIC ANALYSIS METHOD, PROGRAM, RECORDING MEDIUM, AND MICROSCOPE**

(30) Priority: 27.12.2017 JP 2017252438
(71) Applicant: RIKEN, Wako-shi Saitama 351-0198 (JP)
(72) Inventor: TANIGUCHI, Yuichi, Wako-shi, Saitama 351-0198 (JP); JOHMURA, Masae, Wako-shi, Saitama 351-0198 (JP)
(74) Representative: Graf von Stosch Patentanwaltsgesellschaft mbH
(86) International application number: PCT/JP2018/048329
(87) International publication number: WO 2019/131947

(57) **Abstract**

The spectroscopic analysis device (1) includes an imaging section (70), an optical scanning section, and an analyzing section (80). The imaging section (70) is capable of imaging a plurality of molecules (26), which are contained in a sample (25), at a single-molecule level. The optical scanning section is capable of relatively moving a conjugate plane (72) of an imaging plane (71) of the imaging section (70) to scan the sample (25). The analyzing section (80) is capable of obtaining a concentration of the plurality of molecules (26) by analyzing an image of the plurality of molecules (26) which image has been obtained by the imaging section (70). Therefore, it is possible to accurately measure, by using the spectroscopic analysis device (1), the concentration of the plurality of molecules (26) which are thinly distributed in the sample (25) having a relatively large volume.

## Description

### Technical Field

The present invention relates to a spectroscopic analysis device, a spectroscopic analysis method, a program, a storage medium, and a microscope.

### Background Art

Japanese Patent Application Publication *Tokukai* No. 2005-30950 (Patent Literature 1) discloses a method of quantifying a density of a measurement target material (e.g., protein or DNA) immobilized on a cover glass. According to the method disclosed in Patent Literature 1, a sample containing the measurement target material is immobilized on the cover glass. The measurement target material is labeled with a fluorescent substance. Laser light is incident on an interface, which is a measuring plane, between the cover glass and the sample. At this time, that incident laser light is at a total reflection angle with respect to the measuring plane, and the laser light is totally reflected by the measuring plane. However, part of the laser light leaks, as near-field light, into the sample. The near-field light excites the fluorescent substance in the sample in the vicinity of the cover glass, so that fluorescence is emitted. The fluorescence is detected by a detecting section. As a result, an image is obtained in which fluorescence caused by the fluorescent substance is captured. The density of the measurement target material is estimated by counting the number of fluorescence spots captured in the image.

### Citation List

### [Patent Literature]

[Patent Literature 1]
Japanese Patent Application Publication *Tokukai* No. 2005-30950

### Summary of Invention

### Technical Problem

However, a concentration of a measurement target material which can be estimated by the method disclosed in Patent Literature 1 is limited to that of a measurement target material present in a range (within approximately 200 nm) where the near-field light leaks. It is difficult to measure a concentration of the measurement target material contained in a sample having a relatively large volume, by the method disclosed in Patent Literature 1. An object of the present invention is to provide a spectroscopic analysis device and a spectroscopic analysis method each of which is configured to allow for accurate measurement of a concentration of a plurality of molecules thinly distributed in a sample having a relatively large volume. Another object of the present invention is to provide a microscope configured to allow for accurate observation of a plurality of molecules which are thinly distributed in a sample having a relatively large volume.

### Solution to Problem

A spectroscopic analysis device in accordance with an aspect of the present invention includes an imaging section, an optical scanning section, and an analyzing section. The imaging section is configured to be capable of imaging a plurality of molecules at a single-molecule level by detecting emission light which is emitted from the plurality of molecules contained in a sample. The optical scanning section is configured to be capable of relatively moving a conjugate plane of an imaging plane of an imaging section to scan at least one partial region of the sample. The sample includes the plurality of molecules. The analyzing section is configured to be capable of obtaining a concentration of the plurality of molecules by analyzing an image of the plurality of molecules, which image has been obtained by the imaging section.

A spectroscopic analysis method in accordance with an aspect of the present invention includes the step of obtaining an image of a plurality of molecules, by imaging the plurality of molecules at a single-molecule level concurrently with relatively moving a conjugate plane of an imaging plane of an imaging section to scan at least one partial region of a sample containing the plurality of molecules. The spectroscopic analysis method in accordance with an aspect of the present invention further includes the step of obtaining a concentration of the plurality of molecules by analyzing the image of the plurality of molecules.

A microscope in accordance with an aspect of the present invention includes an observation objective lens, an irradiation objective lens, a lens holder, and an optical scanning section. The observation objective lens is arranged so as to be capable of transmitting emission light which is emitted from a plurality of molecules contained in a sample supported by a sample supporting part. The irradiation objective lens is arranged so as to be capable of transmitting sheet light toward the sample. The optical scanning section is configured to be capable of relatively moving an observation plane of the observation objective lens to scan at least one partial region of the sample, in a first direction and a second direction which intersect with each other and in each of which a sample supporting surface of the sample supporting part extends. The observation objective lens and the irradiation objective lens can be provided on a side opposite to the sample with respect to the sample supporting part. The lens holder is configured to be capable of holding the observation objective lens and the irradiation objective lens. The lens holder fixes a relative position of the observation objective lens with respect to the irradiation objective lens. The lens holder includes a liquid retaining section. The liquid retaining section is configured to be capable of retaining a refractive index matching liquid which fills a space formed by the observation objective lens, the irradiation objective lens, and the sample supporting part.

### Advantageous Effects of Invention

A spectroscopic analysis device and a spectroscopic analysis method in accordance with an aspect of the present invention each can allow for accurate measurement of a concentration of a plurality of molecules which are thinly distributed in a sample having a relatively large volume. A microscope in accordance with an aspect of the present invention can allow for accurate observation of a plurality of molecules which are thinly distributed in a sample having a relatively large volume.

### Brief Description of Drawings

Fig. 1 is a view schematically illustrating a spectroscopic analysis device in accordance with Embodiment 1.
Fig. 2 is a side view schematically illustrating the spectroscopic analysis device in accordance with Embodiment 1.
Fig. 3 is a partially enlarged plan view schematically illustrating the spectroscopic analysis device in accordance with Embodiment 1.
Fig. 4 is a partially enlarged cross-sectional view schematically illustrating the spectroscopic analysis device in accordance with Embodiment 1.
Fig. 5 is another partially enlarged perspective view schematically illustrating the spectroscopic analysis device in accordance with Embodiment 1.
Fig. 6 is a view showing an example of an image which is obtained by the spectroscopic analysis device in accordance with Embodiment 1.
Fig. 7 is a view illustrating an example of a sample which is measured by the spectroscopic analysis device in accordance with Embodiment 1.
Fig. 8 is a partially enlarged cross-sectional view schematically illustrating a spectroscopic analysis device in accordance with a First Variation of Embodiment 1.
Fig. 9 is a partially enlarged cross-sectional view schematically illustrating a spectroscopic analysis device in accordance with a Second Variation of Embodiment 1.
Fig. 10 is another partially enlarged cross-sectional view schematically illustrating the spectroscopic analysis device in accordance with the Second Variation of Embodiment 1.
Fig. 11 is a partially enlarged cross-sectional view schematically illustrating a spectroscopic analysis device in accordance with a Third Variation of Embodiment 1.
Fig. 12 is a view showing an example of an image which is obtained by the spectroscopic analysis device in accordance with the Third Variation of Embodiment 1
Fig. 13 is another partially enlarged plan view schematically illustrating the spectroscopic analysis device in accordance with the Third Variation of Embodiment 1.
Fig. 14 is a partially enlarged perspective view schematically illustrating the spectroscopic analysis device in accordance with the Third Variation of Embodiment 1.
Fig. 15 is a partially enlarged cross-sectional view schematically illustrating a spectroscopic analysis device in accordance with a Fourth Variation of Embodiment 1.
Fig. 16 is a diagram schematically illustrating a molecule contained in a sample which is measured by a spectroscopic analysis device in accordance with Embodiment 1 or 5. Fig. 16 is also a diagram schematically illustrating a first molecule contained in a sample which is measured by a spectroscopic analysis device in accordance with Embodiment 2 or 3.
Fig. 17 is a flowchart of a spectroscopic analysis method in accordance with any one of Embodiments 1 to 5.
Fig. 18 is a control block diagram illustrating the spectroscopic analysis device in accordance with any one of Embodiments 1 to 5.
Fig. 19 is a view schematically illustrating a spectroscopic analysis device in accordance with Embodiment 2.
Fig. 20 is a diagram schematically illustrating a second molecule contained in the sample which is measured by the spectroscopic analysis device in accordance with Embodiment 2.
Fig. 21 is a view schematically illustrating a spectroscopic analysis device in accordance with Embodiment 3.
Fig. 22 is a diagram schematically illustrating a second molecule contained in the sample which is measured by the spectroscopic analysis device in accordance with Embodiment 3.
Fig. 23 is a view schematically illustrating a spectroscopic analysis device in accordance with Embodiment 4.
Fig. 24 is a view schematically illustrating a molecule contained in a sample which is measured by the spectroscopic analysis device in accordance with Embodiment 4.
Fig. 25 is a partially enlarged plan view schematically illustrating a spectroscopic analysis device in accordance with Embodiment 5.
Fig. 26 is a partially enlarged cross-sectional view schematically illustrating the spectroscopic analysis device in accordance with Embodiment 5.
Fig. 27 is another partially enlarged cross-sectional view schematically illustrating the spectroscopic analysis device in accordance with Embodiment 5.
Fig. 28 is a partially enlarged cross-sectional view schematically illustrating a spectroscopic analysis device in accordance with Embodiment 6.
Fig. 29 is another partially enlarged cross-sectional view schematically illustrating the spectroscopic analysis device in accordance with Embodiment 6.
Fig. 30 is a view showing an example of an image which is obtained by the spectroscopic analysis device in accordance with Embodiment 6.
Fig. 31 is a partially enlarged cross-sectional view schematically illustrating a spectroscopic analysis device in accordance with Embodiment 7.
Fig. 32 is a partially enlarged cross-sectional view schematically illustrating a spectroscopic analysis device in accordance with Embodiment 8.
Fig. 33 is a partially enlarged cross-sectional view schematically illustrating a spectroscopic analysis device in accordance with Embodiment 9.
Fig. 34 is a view showing an example of an image which is obtained by the spectroscopic analysis device in accordance with Embodiment 9.
Fig. 35 is a partially enlarged cross-sectional view schematically illustrating a spectroscopic analysis device in accordance with Embodiment 10.
Fig. 36 is a view showing an example of an image which is obtained by the spectroscopic analysis device in accordance with Embodiment 10.
Fig. 37 is a view schematically illustrating an example in which the spectroscopic analysis device and a spectroscopic analysis method in accordance with any one of Embodiments 1 to 10 are applied to a fluorescent antibody technique.
Fig. 38 is a view schematically illustrating an example in which the spectroscopic analysis device and the spectroscopic analysis method in accordance with any one of Embodiments 1 to 10 are applied to a fluorescence enzyme immunoassay.
Fig. 39 is a view schematically illustrating a correlation spectroscopy device which is an Example Application of the spectroscopic analysis device in accordance with Embodiment 1.
Fig. 40 is a view schematically illustrating a cross-correlation spectroscopy device which is an Example Application of the spectroscopic analysis device in accordance with Embodiment 3.
Fig. 41 is a view schematically illustrating a fluorescence resonance energy transfer measuring device which is an Example Application of the spectroscopic analysis device in accordance with Embodiment 3.

### Description of Embodiments

The following will discuss Embodiments of the present invention. Note that an identical reference sign is given to each member having an identical configuration, and an explanation thereof will not be repeated.

### (Embodiment 1)

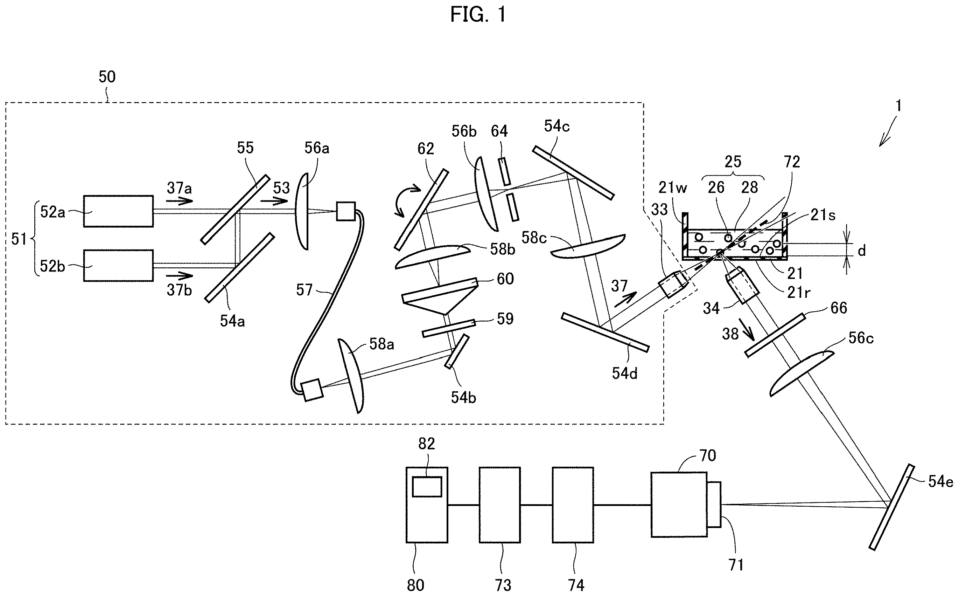

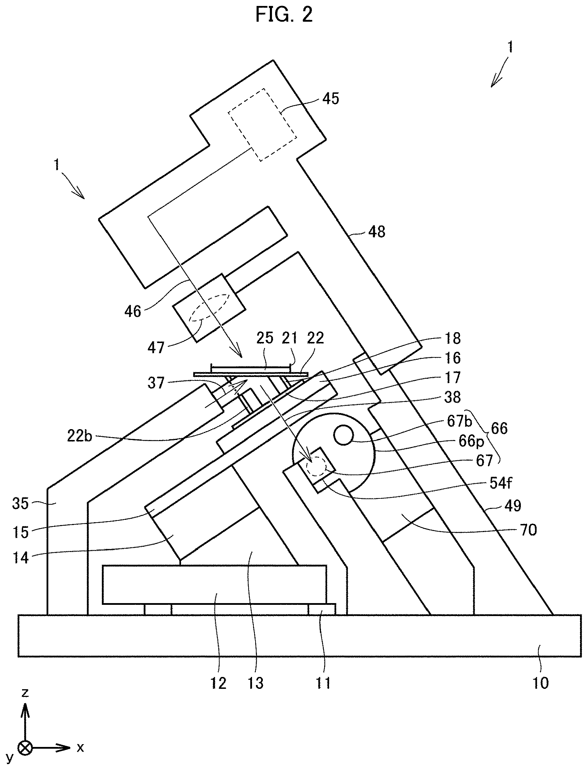

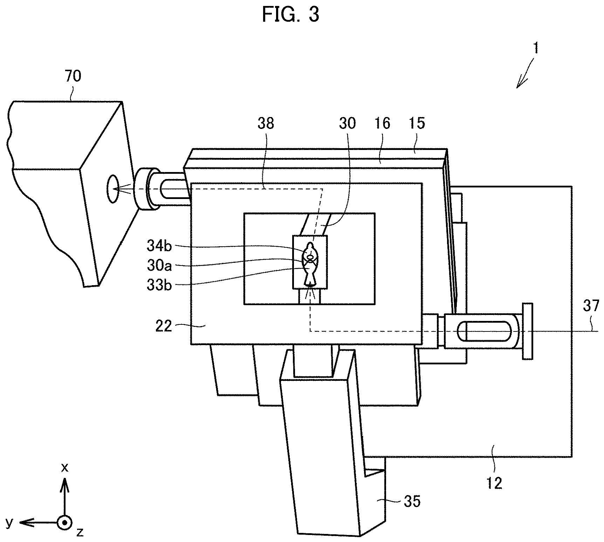

The following will discuss a spectroscopic analysis device 1 in accordance with Embodiment 1, with reference to Figs. 1 to 15, 17, and 18. The spectroscopic analysis device 1 mainly includes an imaging section 70, an optical scanning section (12, 14, 16, and 22), and an analyzing section 80. The spectroscopic analysis device 1 can further include an observation objective lens 34, an optical unit 50, and a lens holder 30. In addition, the spectroscopic analysis device 1 can further include a mirror 54f (see Fig. 2), a filter wheel 66, a condensing lens 56c, a mirror 54e, an image processing section 73, and a low-pass filter 74.

A sample 25 is supported by a sample supporting part 21. The sample supporting part 21 has a first main surface 21r serving as a sample supporting surface of the sample supporting part 21, and a second main surface on a side opposite to the first main surface 21r. The first main surface 21r can be an upper surface of the sample supporting part 21, and the second main surface 21s can be a lower surface of the sample supporting part 21. The sample supporting part 21 can be, for example, a transparent substrate such as a cover glass, a petri dish, a flat transparent film, or a curved transparent film. The sample supporting part 21 can further include a side wall 21w which is provided on the transparent substrate. The sample 25 can be contained in a space surrounded by the transparent substrate and the side wall 21w. The first main surface 21r and the second main surface 21s are each can be a flat surface or a curved surface. The sample supporting part 21 can have an open top.

The sample 25 includes a plurality of molecules 26. The plurality of molecules 26 each can have, for example, a size of not less than 0.1 nm, not less than 1 nm, or not less than 10 nm. The plurality of molecules 26 each can have, for example, a size of not more than 1 µm, or not more than 0.1 µm.

The sample 25 can be, for example, a liquid sample containing the plurality of molecules 26 and a liquid 28. The liquid 28 can be, for example, a culture solution, a buffer solution, or the like. The plurality of molecules 26 can exist in cells (adherent cells, floating cells, and/or the like). The sample supporting part 21 can have substantially the same refractive index as the liquid 28. In the present specification, having substantially the same refractive index between the sample supporting part 21 and the liquid 28 means that a difference between the refractive index of the liquid 28 and the refractive index of the sample supporting part 21 is not more than 0.1. Particularly, the difference between the refractive index of the liquid 28 and the refractive index of the sample supporting part 21 can be not more than 0.05.

As described later, in Embodiment 1, a first optical axis 33a of an irradiation objective lens 33 and a second optical axis 34a of the observation objective lens 34 are tilted with respect to the second main surface 21s of the sample supporting part 21. Accordingly, asymmetric aberration occurs in an optical path of the sheet light 37 and an optical path of an emission light 38, in accordance with the difference between the refractive index of the liquid 28 and the refractive index of the sample supporting part 21. The sample supporting part 21 having substantially the same refractive index as the liquid 28 significantly reduces such asymmetric aberration, so that it is possible to obtain a clear image of the plurality of molecules 26. For example, in a case where the liquid 28 is water having a refractive index of 1.33, the sample supporting part 21 can be made of a material having a refractive index of not less than 1.28 and not more than 1.38 (e.g., LUMOX (registered trademark)). In a case where the liquid 28 is a culture solution having a refractive index of 1.38, the sample supporting part 21 can be made of a material having a refractive index of not less than 1.33 and not more than 1.43.

In order to reduce the asymmetric aberration, the sample supporting part 21 can have a thickness of not more than 100 µm. The sample supporting part 21 can have a thickness of not more than 50 µm, or not more than 20 µm. In order to ensure that the sample supporting part 21 has mechanical strength, the sample supporting part 21 can have a thickness of not less than 5 µm.

The plurality of molecules 26 can be thinly distributed in the sample 25. For example, the plurality of molecules 26 in the sample 25 can be at a concentration of not less than 1 × 10⁻²¹ M (1 zM), or not less than 1 × 10⁻¹⁸ M (1 aM). The concentration of the plurality of molecules 26 in the sample 25 is not particularly limited, and can be not more than 1 × 10⁻⁹ M (1 nM), or not more than 1 × 10⁻¹² M (1 pM). The number of the plurality of molecules 26 in the sample 25 can be not less than 1 × 10⁻²⁴ mol (1 ymol), or not less than 1 × 10⁻²¹ mol (1 zmol). The number of the plurality of molecules 26 in the sample 25 is not particularly limited, and can be not more than 1 × 10⁻¹⁵ mol (1 fmol) or not more than 1 × 10⁻¹⁸ mol (1 amol).

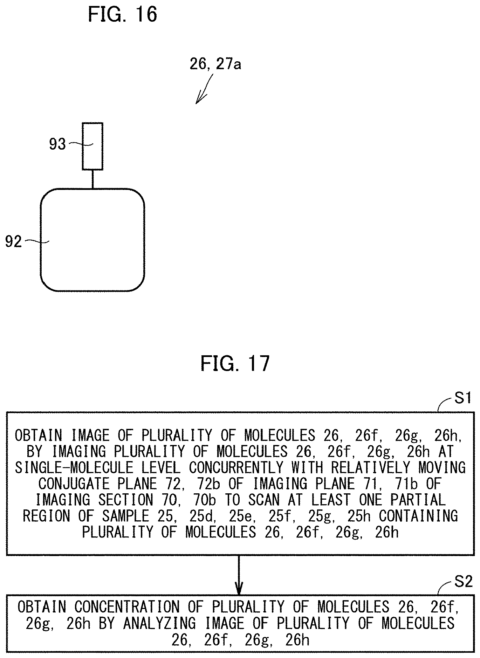

The plurality of molecules 26 each can be, for example, a biological molecule, a biological molecule (first biological molecule 92 illustrated in Fig. 16) which is labeled with a fluorescent substance (first fluorescent substance 93 illustrated in Fig. 16) such as a fluorescent protein or a fluorescent pigment, or a biological molecule which is labeled with a luminescent substance. The biological molecule can be, for example, protein, RNA, DNA, or a low-molecular compound such as fatty acid, amino acid, any of other organic acids, or sugar. The biological molecule can be, for example, one subunit of a multimeric protein. The protein can be, for example, a spherical protein having a diameter of several nanometers. The biological molecule can be, for example, a fragment of genome DNA cut by a restriction enzyme, or an artificially synthesized oligonucleotide. A DNA double-stranded structure constituting a human genome has, for example, a shape of string having a width of approximately 2 nm and a length of approximately 1 m. The biological molecule can be, for example, one molecule of a gene transcription product (mRNA). The gene transcription product (mRNA) has, for example, a shape of string having a width of approximately 0.3 nm, and a length of not less than 10 nm and not more than 5000 nm.

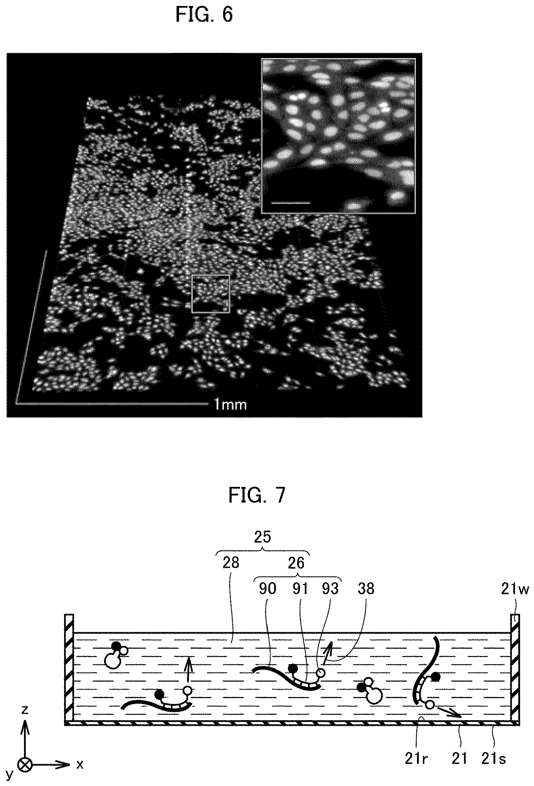

The imaging section 70 is configured to be capable of imaging the plurality of molecules 26 at a single-molecule level by detecting the emission light 38 emitted from the plurality of molecules 26 which are contained in the sample 25. The plurality of molecules 26 are imaged at the single-molecule level in an image of the plurality of molecules 26, which image has been obtained by the imaging section 70. The imaging section 70 can be a CCD camera or a CMOS camera. The imaging section 70 has an imaging plane 71. The image of the plurality of molecules 26 can include, for example, a dot image of the plurality of molecules 26 (bright spots of the plurality of molecules 26). The dot image of the plurality of molecules 26 is suitable for counting the number of the plurality of molecules 26. Fig. 6 shows, as an example, an image which is obtained by the spectroscopic analysis device 1 and which shows U2OS cells contained in a region having a volume of 0.8 µL in the sample 25 (culture solution).

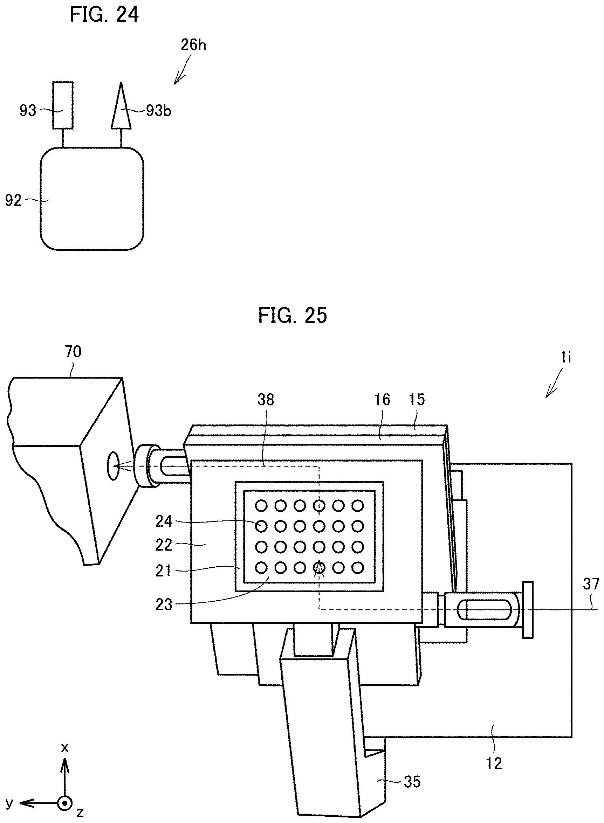

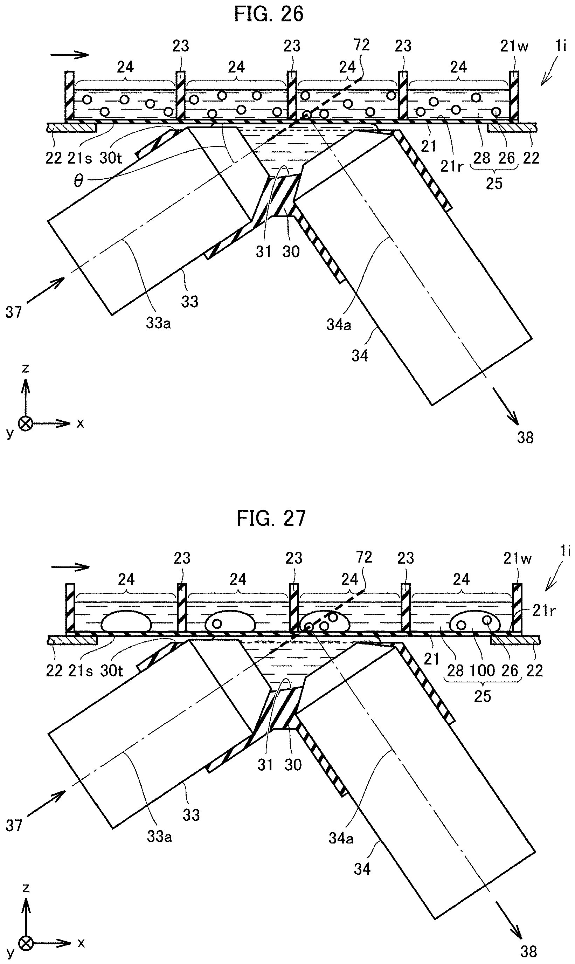

The observation objective lens 34 is arranged so as to be capable of transmitting the emission light 38, which is emitted from the plurality of molecules 26, toward the imaging section 70. The observation objective lens 34 can be provided on a side opposite to the sample 25 with respect to the sample supporting part 21. Specifically, the observation objective lens 34 can be provided below the sample supporting part 21. The observation objective lens 34 can be opposed to the second main surface 21s of the sample supporting part 21. The second optical axis 34a of the observation objective lens 34 is tilted with respect to the second main surface 21s of the sample supporting part 21. This allows the emission light 38 to be detected without interruption caused by the side wall 21w or another sample 25 (see Figs. 25 and 26). According to the spectroscopic analysis device 1, the sample 25 can be observed without interruption caused by the side wall 21w or another sample 25 (see Figs. 25 and 26).

The observation objective lens 34 is not particularly limited, and can have a magnifying power of not less than 2 times, not less than 10 times, or not less than 20 times. The observation objective lens 34 is not particularly limited, and can have a magnifying power of not more than 100 times, or not more than 60 times. In order to image the plurality of molecules 26 at the single-molecule level at a high resolution, the observation objective lens 34 can have a numerical aperture of not less than 0.4, not less than 0.8, or not less than 1.1. The observation objective lens 34 can have a working distance of not less than 0.1 mm, not less than 0.5 mm, or not less than 2.0 mm. The emission light 38 can be collimated by the observation objective lens 34.

The emission light 38 can be fluorescence. For example, in a case where the plurality of molecules 26 include a plurality of first biological molecules 92 each labeled with the first fluorescent substance 93 as illustrate in Fig. 16, fluorescence can occur from the first fluorescent substance 93 when the first fluorescent substance 93 is irradiated with the sheet light 37. The emission light 38 can be scattered light such as Raman scattered light. The emission light 38 can be light emitted from a luminescent substance. For example, the sample 25 can be, for example, a liquid sample containing the plurality of molecules 26 and the liquid 28, and the plurality of molecules 26 can be a plurality of biological molecules labeled with a luminescent substance. The luminescent substance chemically reacts with a substance contained in the liquid 28, so that the luminescent substance is excited from a ground state to an excited state. The emission light 38 can be emitted from the luminescent substance while the luminescent substance transitions from the excited state to the ground state.

As illustrated in Figs. 2 to 4, the optical scanning section (12, 14, 16, and 22) is configured to be capable of relatively moving a conjugate plane 72 of the imaging plane 71 of the imaging section 70 to scan at least one partial region of the sample 25. In the present specification, the conjugate plane 72 of the imaging plane 71 means a plane which is optically conjugate to the imaging plane 71 in an exit-side optical system (including the observation objective lens 34, the condensing lens 56c, etc. in Embodiment 1) present between the sample 25 and the imaging plane 71.

The conjugate plane 72 of the imaging plane 71 can be an observation plane (focal plane) of the observation objective lens 34. The conjugate plane 72 of the imaging plane 71 of the imaging section 70 or the observation plane of the observation objective lens 34 can be caused to relatively move to scan at least one partial region of the sample 25, by moving the sample 25 relative to the observation objective lens 34 or by moving the observation objective lens 34 relative to the sample 25. The optical scanning section (12, 14, 16, and 22) can be also configured to be capable of relatively moving the sheet light 37 to scan at least one partial region of the sample 25.

The at least one partial region of the sample 25, which is scanned by the optical scanning section (12, 14, 16, and 22) relatively moved, can have a volume of not less than 10⁻¹⁰ m³ (0.1 pL), not less than 5 × 10⁻¹⁰ m³ (0.5 pL), not less than 10⁻⁹ m³ (1 µL), not less than 5 × 10⁻⁹ m³ (5 pL), or not less than 10⁻⁸ m³ (10 µL). The volume of not less than 10⁻¹⁰ m³ (0.1 µL) is a volume at which it is possible to accurately measure the concentration of the plurality of molecules 26 which are distributed in the sample 25 at such a low concentration as 1 × 10⁻²¹ M (1 zM) or 1 × 10⁻¹⁸ M (1 aM). The volume of not less than 10¹⁰ m³ (0.1 µL) is a volume at which a quantity of the sample 25 can be easily determined by using a biochemical instrument such as a micropipette. In a case where the sample 25 is a liquid sample, the volume of not less than 10¹⁰ m³ (0.1 µL) is a volume at which it is possible to ignore influence of evaporation of the liquid 28 from the sample 25 on measurement of the concentration of the plurality of molecules 26, and thus it is possible to accurately measure the concentration of the plurality of molecules 26.

The at least one partial region of the sample 25, which is scanned by the optical scanning section (12, 14, 16, and 22) relatively moved, can include a region of the sample 25 which region is located at a distance d of not less than 500 nm, not less than 1 µm, or not less than 5 µm from the sample supporting surface (first main surface 21r) of the sample supporting part 21. The at least one partial region of the sample 25, which is scanned by the optical scanning section (12, 14, 16, and 22) relatively moved, can include a region of the sample 25 which region is located at a distance d of not less than 10 µm, not less than 50 µm, or not less than 100 µm from the sample supporting surface (first main surface 21r) of the sample supporting part 21. The at least one partial region of the sample 25 is not particularly limited, and can include a region of the sample 25 which region is located at a distance d of not more than 2000 µm or not more than 400 µm from the sample supporting surface (first main surface 21r) of the sample supporting part 21.

The optical scanning section (12, 14, 16, and 22) can be configured to be capable of relatively moving the conjugate plane 72 of the imaging plane 71 of the imaging section 70 or the observation plane of the observation objective lens 34 to scan the at least one partial region of the sample 25, in a first direction (x direction) in which the sample supporting part 2 1 extends. Particularly, the optical scanning section (12, 14, 16, and 22) can be configured to be capable of relatively moving the conjugate plane 72 of the imaging plane 71 of the imaging section 70 or the observation plane of the observation objective lens 34 to scan the at least one partial region of the sample 25, in (i) the first direction (x direction) in which the sample supporting part 21 extends and (ii) a second direction (y direction) in which the sample supporting part 21 extends and which intersects with the first direction. Particularly, the second direction can be perpendicular to the first direction. The optical scanning section (12, 14, 16, and 22) can also be configured to be capable of relatively moving the conjugate plane 72 of the imaging plane 71 of the imaging section 70 or the observation plane of the observation objective lens 34 to scan the at least one partial region of the sample 25, also along the second optical axis 34a.

The optical scanning section (12, 14, 16, and 22) can include a moving section (12, 14, and 16) which is configured to be capable of moving the sample supporting part 21 in the first direction (x direction). Particularly, the moving section (12, 14, and 16) can be also configured to be capable of moving the sample supporting part 21 in the second direction (y direction) as well. Specifically, the moving section (12, 14, and 16) includes an x-y stage 12 and a coarse motion stage 14. The moving section (12, 14, and 16) can further include a fine motion stage 16. In addition, the moving section (12, 14, and 16) can further include a guide rail 11 which is provided on a base 10, a block 13, a first plate member 15, a second plate member 17, and a leg member 18.

The guide rail 11 is provided on the base 10. The x-y stage 12 is provided so as to be movable on the guide rail 11. The x-y stage 12 moves a sample stage 22 in the first direction (x direction) and in the second direction (y direction). The coarse motion stage 14 is connected to the x-y stage 12 via the block 13. The fine motion stage 16 is connected to the coarse motion stage 14 via the first plate member 15. The coarse motion stage 14 and the fine motion stage 16 move the sample stage 22, along the second optical axis 34a of the observation objective lens 34. The fine motion stage 16 can more precisely control a position of the sample stage 22 in the second direction (y direction) than the coarse motion stage 14.

The second plate member 17 is provided on the fine motion stage 16. The second plate member 17 is connected to the leg member 18. The leg member 18 is connected to the sample stage 22 and supports the sample stage 22. The sample supporting part 21, which supports the sample 25, is mounted on the sample stage 22. The optical scanning section (12, 14, 16, and 22) or the moving section (12, 14, and 16) can move the sample 25 in the first direction (x direction), the second direction (y direction), and a direction along the second optical axis 34a, with respect to the conjugate plane 72 of the imaging plane 71 of the imaging section 70 or the observation plane of the observation objective lens 34. As described above, the conjugate plane 72 of the imaging plane 71 of the imaging section 70 or the observation plane of the observation objective lens 34 can be relatively moved to scan the sample 25.

The optical unit 50 is configured to be capable of emitting the sheet light 37 toward the sample 25. The optical unit 50 can include the irradiation objective lens 33 which is arranged so as to be capable of transmitting the sheet light 37 toward the sample 25. The irradiation objective lens 33 is not particularly limited, and can have a magnifying power of not less than 2 times or not less than 10 times. The irradiation objective lens 33 is not particularly limited, and can have a magnifying power of not more than 30 times, or not more than 20 times.

The optical unit 50 (irradiation objective lens 33) can be provided on a same side as the observation objective lens 34 with respect to the sample supporting part 21. The optical unit 50 (irradiation objective lens 33) can be provided on a side opposite to the sample 25 with respect to the sample supporting part 21. Specifically, the optical unit 50 (irradiation objective lens 33) can be provided below the sample supporting part 21. The optical unit 50 (irradiation objective lens 33) can be opposed to the second main surface 21s of the sample supporting part 21.

The first optical axis 33a of the irradiation objective lens 33 is tilted with respect to the second main surface 21s of the sample supporting part 21. The second main surface 21s is a surface on which the sheet light 37 can be incident. Accordingly, the sample 25 can be irradiated with the sheet light 37, without interruption caused by the side wall 21w or another sample 25 (see Figs. 25 and 26). The first optical axis 33a can make an angle θ of not less than 1 degree or not less than 5 degrees with respect to the second main surface 21s of the sample supporting part 21. The first optical axis 33a can make an angle θ of not more than 60 degrees or not more than 40 degrees with respect to the second main surface 21s of the sample supporting part 21.

The sheet light 37 can travel in a direction substantially parallel to the conjugate plane 72 of the imaging plane 71 of the imaging section 70 or the observation plane of the observation objective lens 34. This makes it possible to obtain a clear image of the plurality of molecules 26 since generation of a non-uniform defocus is reduced in the conjugate plane 72 of the imaging plane 71 of the imaging section 70 or in the observation plane of the observation objective lens 34. In the present specification, the sheet light 37 travels in the direction substantially parallel to the conjugate plane 72 of the imaging plane 71 of the imaging section 70 or the observation plane of the observation objective lens 34, and this means that the direction in which the sheet light 37 travels makes an angle of not more than 15 degrees with respect to the conjugate plane 72 of the imaging plane 71 of the imaging section 70 or with the observation plane of the observation objective lens 34. The angle between the direction in which the sheet light 37 travels and the second optical axis 34a of the observation objective lens 34 is not less than 75 degrees and not more than 105 degrees. The sheet light 37 can be, for example, parallel light, convergent light, or Bessel beam.

The sheet light 37 reduces generation of the emission light 38 from another sample 25 which is present outside the conjugate plane 72 of the imaging plane 71 of the imaging section 70 or the observation plane of the observation objective lens 34. The sheet light 37 can reduce background noise in imaging of the plurality of molecules 26. As compared to a case where the sample 25 is entirely irradiated with light, the sheet light 37 can prevent the plurality of molecules 26 contained in the sample 25 from being continuously irradiated with the light for a long time. The sheet light 37 makes it possible to reduce color fading and phototoxicity of the plurality of molecules 26. The sheet light 37 allows for high-speed single molecule imaging of the plurality of molecules 26. The sheet light 37 can have, for example, a minimum thickness of not more than 20 µm, not more than 15 µm, not more than 10 µm, not more than 5 µm, or not more than 2 µm.

The optical unit 50 can include a light source 51 and a beam shape transforming section 62. The beam shape transforming section 62 transforms, into the sheet light 37, input light 53 which is emitted from the light source 51. In Embodiment 1, the beam shape transforming section 62 is an oscillating mirror such as a galvano mirror or a micro-electro-mechanical-systems (MEMS) mirror. The beam shape transforming section 62 can be a cylindrical lens, an acousto-optic deflector, or a diffraction grating. The optical unit 50 can include an axicon lens 60. The axicon lens 60 can be provided between the light source 51 and the beam shape transforming section 62. The optical unit 50 can further include mirrors 54a, 54b, 54c, and 54d, an optical multiplexer 55, condensing lenses 56a and 56b, an optical fiber 57, collimating lenses 58a, 58b, and 58c, an annular zone phase element 59 and an aperture 64. The condensing lenses 56a and 56b and the collimating lenses 58a, 58b, and 58c can be each an achromatic lens. The optical unit 50 need not necessarily include the annular zone phase element 59. The optical unit 50 need not necessarily include the axicon lens 60.

The light source 51 can include a first light source element 52a and a second light source element 52b. The first light source element 52a and the second light source element 52b can be each a laser light source. The first light source element 52a is configured to be capable of emitting first input light 37a. The second light source element 52b is configured to be capable of emitting second input light 37b having a wavelength different from that of the first input light 37a. The light source 51 can be arranged to include only the first light source element 52a and no second light source element 52b.

The second input light 37b emitted from the second light source element 52b is reflected by the mirror 54a. The first input light 37a emitted from the first light source element 52a and the second input light 37b reflected by the mirror 54a are multiplexed into the input light 53, by the optical multiplexer 55. The input light 53 can contain the first input light 37a and the second input light 37b. The input light 53 is condensed by the condensing lens 56a and caused to enter the optical fiber 57. The input light 53 having exited from the optical fiber 57 is collimated by the collimating lens 58a.

The input light 53 having passed through the collimating lens 58a is reflected by the mirror 54b, and enters the annular zone phase element 59. The annular zone phase element 59 is configured to be capable of distributing energy in a side lobe of the input light 53 into a central lobe of the input light 53. The annular zone phase element 59 can reduce generation of a side lobe of the sheet light 37. The annular zone phase element 59 can reduce background noise in imaging of the plurality of molecules 26. The annular zone phase element 59 can be, for example, an annular zone phase element which is disclosed in International Publication No. WO 2017/138625.

The input light 53 having passed through the annular zone phase element 59 enters the axicon lens 60. The axicon lens 60 transforms the input light 53 into a Bessel beam which has a more uniform light intensity distribution. The input light 53 having passed through the axicon lens 60 passes through the collimating lens 58b and enters the beam shape transforming section 62. The beam shape transforming section 62 transforms the input light 53 into the sheet light 37. The sheet light 37 passes through the condensing lens 56b and caused to enter the aperture 64. The sheet light 37 having passed through the aperture 64 is reflected by the mirror 54c and enters the collimating lens 58c. The sheet light 37 having passed through the collimating lens 58c is reflected by the mirror 54d and caused to exit from the optical unit 50. The sheet light 37 having exited from the optical unit 50 is collected by the irradiation objective lens 33, so that the sample 25 is irradiated with the sheet light 37 thus collected.

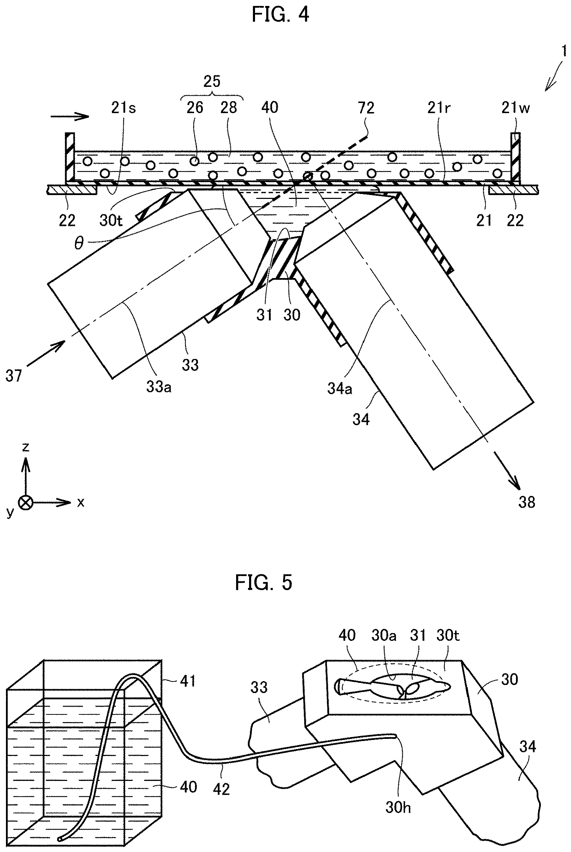

As illustrated in Figs. 4 and 5, the lens holder 30 holds the observation objective lens 34 and the irradiation objective lens 33. The lens holder 30 fixes a relative position of the observation objective lens 34 with respect to the irradiation objective lens 33. The lens holder 30 can be a curved cylindrical body. The irradiation objective lens 33 and the observation objective lens 34 can be housed in the lens holder 30 which is a cylindrical body. The first optical axis 33a of the irradiation objective lens 33 and the second optical axis 34a of the observation objective lens 34 extend inside the lens holder 30 which is the cylindrical body. The lens holder 30 includes a top portion 30t which is opposed to the second main surface 21s of the sample supporting part 21. The top portion 30t includes an aperture 30a which is configured so as to allow the sheet light 37 and the emission light 38 to pass through the aperture 30a.

As illustrated in Fig. 2, the spectroscopic analysis device 1 can further include the base 10 and a first arm 35. The lens holder 30 has a first end which is fixed to the first arm 35. The first arm 35 is fixed to the base 10. The lens holder 30 has a second end which is attached to movable stages (the coarse motion stage 14 and the fine motion stage 16). Specifically, the second end of the lens holder 30 is fixed to the fine motion stage 16 via the second plate member 17. The second end of the lens holder 30 is attached to the coarse motion stage 14 via the second plate member 17, the fine motion stage 16, and the first plate member 15.

The lens holder 30 can include a liquid retaining section 31. The liquid retaining section 31 is configured to be capable of retaining a refractive index matching liquid 40 which fills a space formed by the irradiation objective lens 33, the observation objective lens 34, and the sample supporting part 21. In the present specification, the refractive index matching liquid 40 means a liquid which can make a difference in refractive index between the refractive index matching liquid 40 and the sample supporting part 21 smaller than that between air (refractive index nₐᵢᵣ = 1) and the sample supporting part 21. The refractive index matching liquid 40 reduces respective amounts of refraction of the sheet light 37 and refraction of the emission light 38 at the second main surface 21s of the sample supporting part 21. The first optical axis 33a of the irradiation objective lens 33 and the second optical axis 34a of the observation objective lens 34 are tilted with respect to the second main surface 21s of the sample supporting part 21. On this account, if the refractive index matching liquid 40 is absent, asymmetric aberration occurs in the optical path of the sheet light 37 and in the optical path of the emission light 38 in accordance with a difference between the refractive index of air and the refractive index of the sample supporting part 21. The refractive index matching liquid 40 makes it possible to obtain a clear image of the plurality of molecules 26, by significantly reducing the asymmetric aberration.

Particularly, the refractive index matching liquid 40 can have substantially the same refractive index as the sample supporting part 21 (transparent substrate). In the present specification, the refractive index matching liquid 40 has substantially the same refractive index as the sample supporting part 21, and this means that a different between the refractive index of the refractive index matching liquid 40 and the refractive index of the sample supporting part 21 is not more than 0.1. Particularly, the difference between the refractive index of the refractive index matching liquid 40 and the refractive index of the sample supporting part 21 can be not more than 0.05. The refractive index matching liquid 40 can be, for example, water or oil. For example, in a case where the sample supporting part 21 is made of a material having a refractive index of not less than 1.28 and not more than 1.38 (e.g., LUMOX (registered trademark)), the refractive index matching liquid 40 can be water which has a refractive index of 1.33.

The irradiation objective lens 33 in contact with the refractive index matching liquid 40 functions as a first immersion lens, and the observation objective lens 34 in contact with the refractive index matching liquid 40 functions as a second immersion lens. This increases the numerical aperture of the irradiation objective lens 33 serving as the first immersion lens and the numerical aperture of the observation objective lens 34 serving as the second immersion lens, so that the spectroscopic analysis device 1 has a higher resolution.

As illustrated in Fig. 5, the lens holder 30 can further include an injection port 30h which is configured such that the refractive index matching liquid 40 can be injected into the liquid retaining section 31. The injection port 30h communicates with the liquid retaining section 31. A tube 42 is connected to a liquid pool 41 and the injection port 30h. The refractive index matching liquid 40 in the liquid pool 41 is injected into the liquid retaining section 31 through the tube 42 and the injection port 30h.

As illustrated in Figs. 1 and 2, the emission light 38 having passed through the observation objective lens 34 is reflected by the mirror 54f and enters the filter wheel 66. The filter wheel 66 is configured to be capable of selectively transmitting one of the first input light 37a and the second input light 37b. The filter wheel 66 includes a rotating plate 66p which is configured to be rotatable, and a plurality of filters 67 and 67b which are provided in the rotating plate 66p. The filter 67 transmits the emission light 38 which occurs from the sample 25 due to the first input light 37a, and blocks the emission light 38 which occurs from the sample 25 due to the second input light 37b. The filter 67b transmits the emission light 38 which occurs from the sample 25 by the second input light 37b, and blocks the emission light 38 which occurs from the sample 25 due to the first input light 37a.

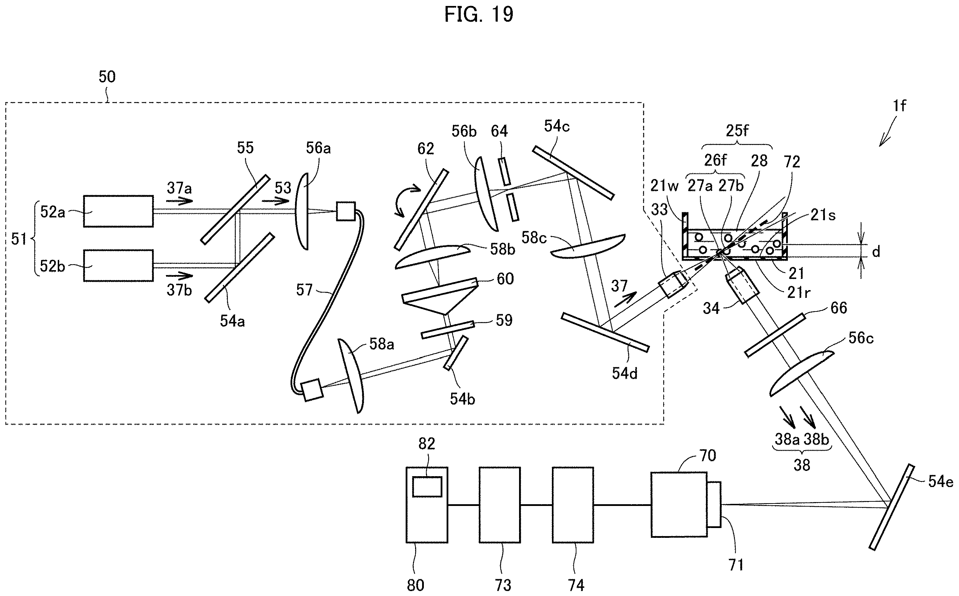

In a case where the plurality of molecules 26 include a plurality of first molecules 27a capable of emitting first output light 38a and a plurality of second molecules 27b capable of emitting second output light 38b (see Fig. 19), the filter wheel 66 can selectively transmit one of the first output light 38a and the second output light 38b. For example, the filter 67 transmits the first output light 38a which is emitted from the plurality of first molecules 27a, and blocks the second output light 38b which is emitted from the plurality of second molecules 27b. On the other hand, the filter 67b transmits the second output light 38b which is emitted from the plurality of second molecules 27b, and blocks the first output light 38a which is emitted from the plurality of first molecules 27a. As described above, the filter wheel 66 allows the analyzing section 80 to individually analyze a first molecule image and a second molecule image.

The image processing section 73 can be configured to be capable of binarizing the image of the plurality of molecules 26, which image has been outputted from the imaging section 70. The low-pass filter 74 removes a high-frequency component contained in the image of the plurality of molecules 26, which image has been outputted from the imaging section 70, and outputs, to the image processing section 73, the image of the plurality of molecules 26 from which image the high-frequency component has been removed.

The analyzing section 80 is configured to be capable of obtaining the concentration of the plurality of molecules 26 by analyzing the image of the plurality of molecules 26, which image has been obtained by the imaging section 70. In the present specification, the concentration of the plurality of molecules 26 is defined in terms of the number of the plurality of molecules 26 or the number of moles of the plurality of molecules 26 in a volume of the sample 25 which is scanned by the optical scanning section (12, 14, 16, and 22) relatively moved. The analyzing section 80 is configured to be capable of obtaining a temporal change and a spatial variation of the concentration of the plurality of molecules 26. Particularly, the analyzing section 80 can include a counting section 82. The counting section 82 is configured to be capable of counting the number of the plurality of molecules 26 contained in the image of the plurality of molecules 26 which image has been obtained by the imaging section 70.

As illustrated in Fig. 2, the spectroscopic analysis device 1 can further include an illuminating light source 45, a condenser lens 47, a second arm 48, and a third arm 49. The illuminating light source 45 is configured to be capable of illuminating, via the condenser lens 47, the sample 25 mounted on the sample stage 22. The illuminating light source 45 can be, for example, a halogen lamp. The illuminating light source 45 and the condenser lens 47 are attached to the second arm 48. The second arm 48 is attached to the third arm 49 which is fixed to the base 10.

The following will discuss, with reference to Fig. 7, an example of detection of a nucleic acid sequence 90 (for example, DNA or RNA) contained the sample 25 by use of the spectroscopic analysis device 1. In order to detect the nucleic acid sequence 90, the following steps are generally performed. First, the nucleic acid sequence 90, which is a detection target, is hybridized with a fluorescent oligo-DNA (91 and 93) having a nucleic acid sequence complementary to the nucleic acid sequence 90. Alternatively, the nucleic acid sequence 90, which is a detection target, is bound to a fluorescent aptamer which specifically binds to the nucleic acid sequence 90. The fluorescent oligo-DNA (91 and 93) is an oligo-DNA 91 labeled with the first fluorescent substance 93 Then, fluorescence emitted from the fluorescent oligo-DNA (91 and 93), the fluorescent aptamer, or the like is detected by a photodetector. In a case where an intensity of the fluorescence emitted from the sample 25 is too low to be in a detection range of the photodetector, it is necessary to amplify the nucleic acid sequence 90, which is a detection target, by a well-known nucleic acid sequence amplification method such as a PCR method.

On the other hand, in the spectroscopic analysis device 1, the plurality of molecules 26 (e.g., the nucleic acid sequence 90 such as a DNA sequence or an RNA sequence) contained in the sample 25 can be imaged at the single-molecule level. This allows for detection of the nucleic acid sequence 90 without amplification of the nucleic acid sequence 90, even in a case where a concentration of the nucleic acid sequence 90 is very low. For example, in order to detect the nucleic acid sequence 90 contained in a region having a volume of 1.0 µL in the sample 25 by using the spectroscopic analysis device 1, the concentration of the nucleic acid sequence 90 in the sample 25 is sufficient if the concentration is not less than 2 aM.

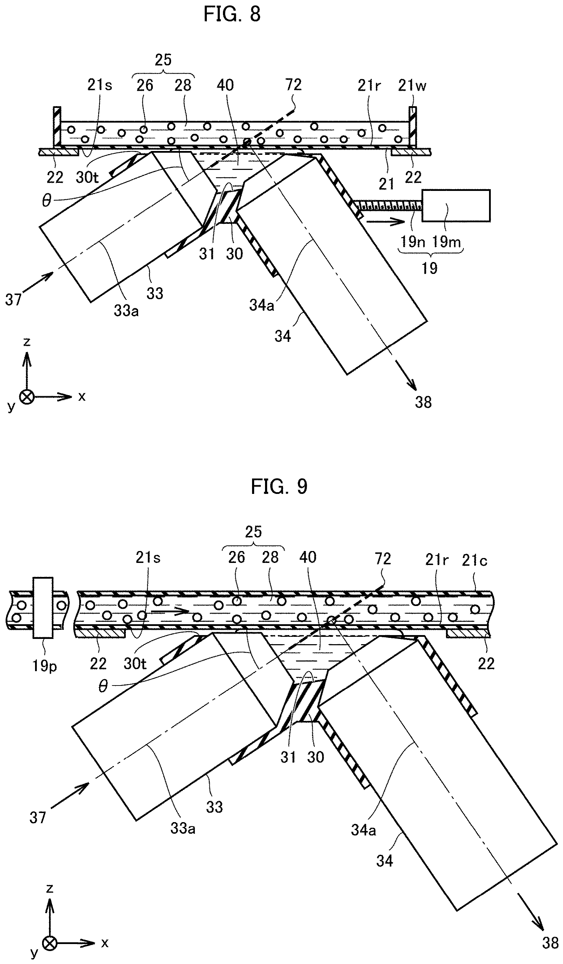

As illustrated in Fig. 8, in a First Variation of Embodiment 1, the optical scanning section (19) can include a moving section 19 in place of the moving section (12, 14, and 16) of Embodiment 1. The moving section 19 is configured to be capable of moving the lens holder 30 in the first direction (x direction). The moving section 19 can include a ball screw 19n which is coupled to the lens holder 30, and a motor 19m which is connected to the ball screw 19n. The moving section 19 can be also configured to be capable of moving the lens holder 30 in the second direction (y direction) as well. The optical scanning section (19) or the moving section 19 can move the observation objective lens 34 relative to the sample 25. As described above, the optical scanning section (19) or the moving section 19 can relatively move the conjugate plane 72 of the imaging plane 71 of the imaging section 70 or the observation plane of the observation objective lens 34 to scan the sample 25. In the First Variation, the sample stage 22 can be fixed to the base 10.

As illustrated in Fig. 9, in a Second Variation of Embodiment 1, an optical scanning section (19p) can include a flow generating section 19p which is configured to be capable of causing a liquid sample (the sample 25) to flow relative to the sample supporting part 21. The flow generating section 19p can be, for example, a pump which is configured to be capable of causing the sample 25 to flow relative to a sample supporting part 21c. The flow generating section 19p can be, for example, a holding member which is configured to be capable of holding the sample supporting part 21c such that the sample supporting part 21c is inclined with respect to a horizontal plane (e.g., xy plane). The flow generating section 19p can be, for example, a gas blowing section which is configured to be capable of blowing gas to the sample 25 such that the sample 25 flows relative to the sample supporting part 21c. The sample supporting part 21c can be a flow channel part in which a liquid sample (the sample 25) flows.

The flow generating section 19p causes the liquid sample (the sample 25) to flow in the sample supporting part 21c. The liquid sample (the sample 25) moves relative to the conjugate plane 72 of the imaging plane 71 of the imaging section 70 or the observation plane of the observation objective lens 34. With the above configuration, the flow generating section 19p can relatively move the conjugate plane 72 of the imaging plane 71 of the imaging section 70 or the observation plane of the observation objective lens 34 to scan the liquid sample (the sample 25). The Second Variation of Embodiment 1 can be a flow cytometer. In the Second Variation of Embodiment 1, the concentration of the plurality of molecules 26 contained in the liquid sample (the sample 25) can be efficiently measured while the liquid sample (the sample 25) is caused to flow. In the Second Variation, the sample stage 22 and the lens holder 30 can be fixed to the base 10. In a case where a molecule 26 is a nucleic acid sequence, the spectroscopic analysis device 1 allows for detection of a rare cell by using, as an indicator, the presence of the nucleic acid sequence which is a target.

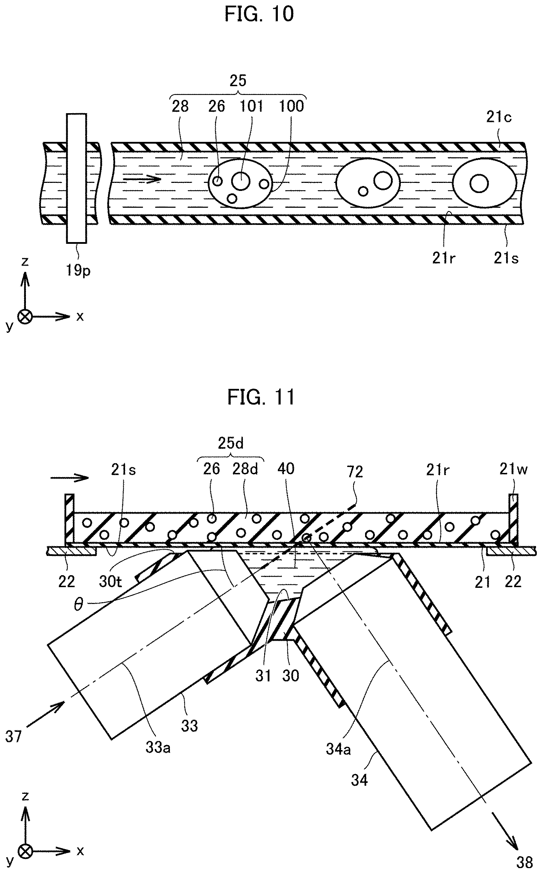

In the Second Variation of Embodiment 2, the following will discuss an example in which the spectroscopic analysis device 1 is used as a flow cytometer, with reference to Fig. 10. A protein (molecule 26) is contained in at least one of a plurality of cells 100. Each of the cells 100 contains a nucleus 101. The protein (molecule 26) in the cell is labeled with a fluorescent substrate which can pass through a lipid bilayer membrane of the cell. The spectroscopic analysis device 1 makes it possible to analyze an expression state of the protein (molecule 26), with regard to each of the plurality of cells 100. The spectroscopic analysis device 1 can detect in situ a protein contained in a cell at a low concentration, since the protein (molecule 26) contained in the sample 25 can be imaged at the single-molecule level.

The plurality of cells 100 are caused to flow, one by one, in the sample supporting part 21c made of a tube. Then, the protein (molecule 26) contained inside the cell 100 is detected at the single-molecule level by the spectroscopic analysis device 1. For example, immediately after at least some of the plurality of cells 100 are infected by a virus, a protein (molecule 26) originating from the virus is contained at a very low concentration inside the some cells 100 of the plurality of cells 100 or in a solution outside the cells 100. The spectroscopic analysis device 1 can accurately detect the protein (molecule 26) contained inside the some cells 100 of the plurality of cells 100 or in the solution outside the cells 100. It is possible to accurately and efficiently analyze the presence of virus infection and a level of that infection in each of the plurality of cells 100.

In another aspect of the Second Variation of Embodiment 1, the spectroscopic analysis device 1 can obtain a value of the concentration of protein (molecule 26) in cells 100, with regard to each of the plurality of cells 100. The plurality of cells 100 are caused to flow, one by one, in the sample supporting part 21c made of a tube. Then, the protein (molecule 26) contained inside the plurality of cells 100 is detected at the single-molecule level by the spectroscopic analysis device 1. The imaging section 70 obtains an image of proteins (molecules 26), and the counting section 82 of the analyzing section 80 counts the number of the proteins (molecules 26) contained in the image. It is possible to obtain the concentration of the protein (molecule 26) in a cell 100 by dividing the number of the proteins (molecules 26) in the cell 100 by a volume of the cell 100. For example, if a typical cell size is 50 µm × 50 µm × 50 µm, then detection sensitivity is 1/(50 µm × 50 µm × 50 µm × 6 × 10²³) = approximately 13 fM.

In the Second Variation of Embodiment 1, in a case where the spectroscopic analysis device 1 is used as a flow cytometer, the detection target can be one subunit of a multimeric protein, or can be a polypeptide, RNA, DNA, or a low-molecular compound such as fatty acid, amino acid, any of other organic acids, or sugar.

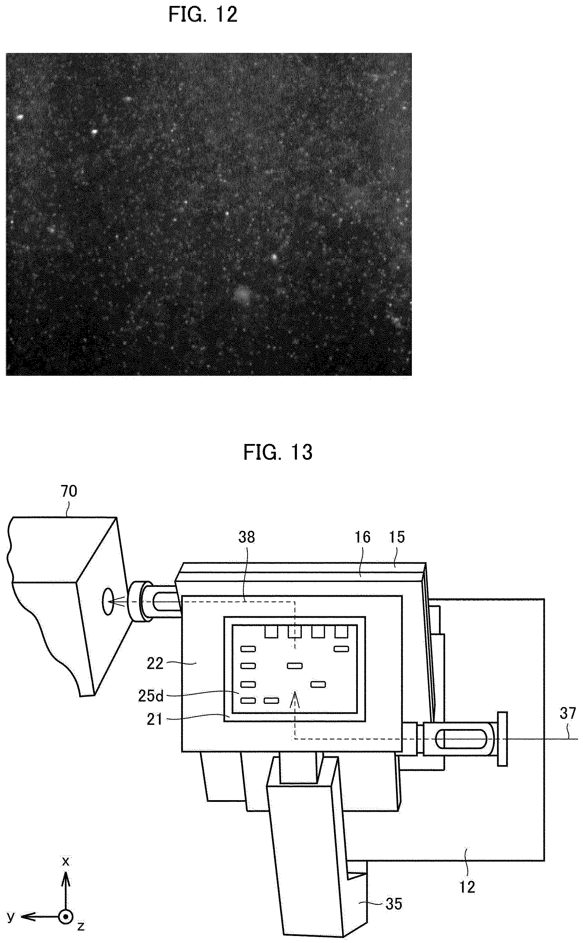

In a Third Variation of Embodiment 1, as illustrated in Fig. 11, a sample 25d can be a gel sample containing a gel 28d and a plurality of molecules 26 (a plurality of molecules 98a, 98b, 98c, and 98d) contained in the gel 28d. The gel 28d can be, for example, agarose gel or gellan gum gel. Fig. 12 shows, as an example, an image of the sample 25d, which image is obtained by the spectroscopic analysis device 1. In the sample 25d, an antibody (anti-mouse IgG (H+L) antibody) labeled with a fluorescent pigment (Alexa 647) is encapsulated in gellan gum gel. In other words, the molecule 26 can be the antibody (anti-mouse IgG (H+L) antibody) labeled with the fluorescent pigment (Alexa 647) and the gel 28d can be gellan gum gel.

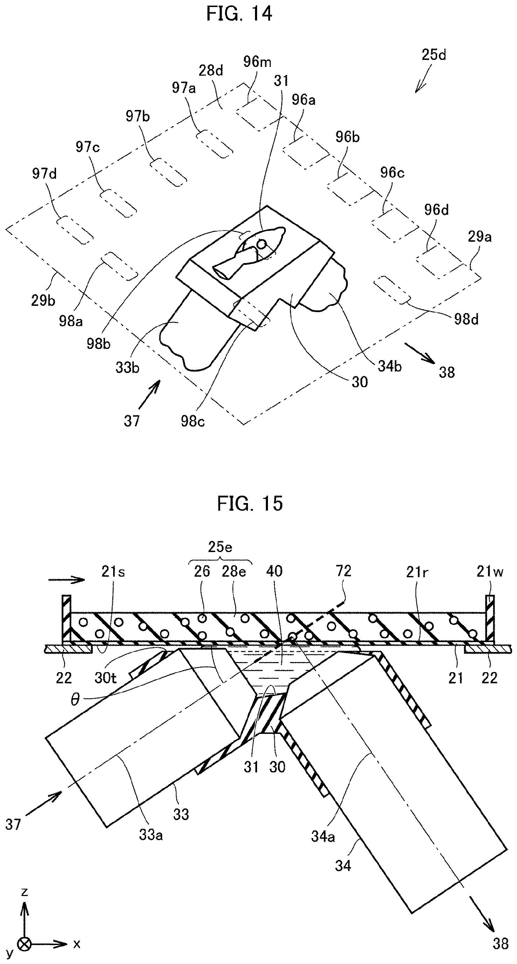

As illustrated in Figs. 13 and 14, the sample 25d of the Third Variation can be, for example, a gel sample prepared by sodium dodecyl sulfate-polyacrylamide gel electrophoresis (SDS-PAGE) method. In order to reduce autofluorescence of the gel sample, which interrupts single-molecule imaging of the plurality of molecules 26, the sample 25 can be exposed to ultraviolet light before the concentration of the plurality of molecules 26 is measured by the spectroscopic analysis device 1.

Specifically, the sample 25d of the Third Variation includes the gel 28d, sample mounting portions 96a, 96b, 96c, and 96d, a marker mounting portion 96m, and molecular weight markers 97a, 97b, 97c, and 97d. On the sample mounting portions 96a, 96b, 96c, and 96d, a plurality of molecules 98a, 98b, 98c, and 98d, such as proteins, are placed, respectively. On the marker mounting portion 96m, the molecular weight markers 97a, 97b, 97c, and 97d are placed. The gel 28d has a first end 29p and a second end 29q which is on a side opposite to the first end 29p, and an electric field is applied between the first end 29p and the second end 29q. The plurality of molecules 98a, 98b, 98c, and 98d travel different distances, respectively, in electrophoresis in the gel 28d. The distances depend on respective molecular weights of the plurality of molecules 98a, 98b, 98c, and 98d. The molecular weight markers 97a, 97b, 97c, and 97d travel different distances, respectively, in electrophoresis in the gel 28d. The distances depend on respective molecular weights of the molecular weight markers 97a, 97b, 97c, and 97d. The sample 25d of the Third Variation is prepared as described above.

As illustrated in Fig. 15, in a Fourth Variation of Embodiment 1, a sample 25e can be a thin membrane sample containing the plurality of molecules 26. In the present specification, the thin membrane sample does not contain a gel sample. The sample 25e of the Fourth Variation of Embodiment 1 can be prepared by using a western blotting technique. Specifically, the plurality of molecules 26 (e.g., proteins) in a gel sample prepared by the SDS-PAGE method are transferred to a membrane 28e which is made of an organic material such as nitrocellulose or polyvinylidene fluoride (PVDF). In order to prevent non-specific adsorption of the membrane 28e to a primary antibody (described later) (an antibody specifically recognizing the plurality of molecules 26) and a labeled secondary antibody (an antibody which is labeled with a fluorescent substance or the like and which specifically recognizes the primary antibody), the membrane 28e to which the plurality of molecules 26 have been transferred is subjected to a blocking treatment with bovine serum albumin or the like. Thereafter, the plurality of molecules 26 are reacted with the primary antibody and then, the labeled secondary antibody is reacted with the primary antibody. The sample 25e of the Fourth Variation is prepared as described above.

In a Fifth Variation of Embodiment 1, the irradiation objective lens 33 and the observation objective lens 34 can be configured so as to be able to move in the first direction (x direction) independently of each other. In a Fifth Variation of Embodiment 1, the irradiation objective lens 33 and the observation objective lens 34 can be also configured so as to be able to move in the second direction (y direction) independently of each other as well. In the Fifth Variation of Embodiment 1, the irradiation objective lens 33 and the observation objective lens 34 can be also configured so as to be able to move in the direction along the second optical axis 34a independently of each other as well.

The following will discuss a spectroscopic analysis method of Embodiment 1, with reference to Fig. 17. A spectroscopic analysis method of Embodiment 1 includes obtaining an image of the plurality of molecules 26, by imaging the plurality of molecules 26 at the single-molecule level concurrently with relatively moving the conjugate plane 72 of the imaging plane 71 of the imaging section 70 to scan at least one partial region of the sample 25, 25d, or 25e containing the plurality of molecules 26 (S1). Specifically, the plurality of molecules 26 are imaged at the single-molecule level by the imaging section 70 while the conjugate plane 72 of the imaging plane 71 of the imaging section 70 is relatively moved to scan at least one partial region of the sample 25, 25d, or 25e, by using the optical scanning section (12, 14, 16, and 22; 19; or 19p). As a result, the image of the plurality of molecules 26 is obtained.

The spectroscopic analysis method of Embodiment 1 further includes obtaining the concentration of the plurality of molecules 26 by analyzing the image of the plurality of molecules 26 (S2). Specifically, the concentration of the plurality of molecules 26 can be obtained by analyzing the image of the plurality of molecules 26, which image has been obtained by the imaging section 70, with use of the analyzing section 80.

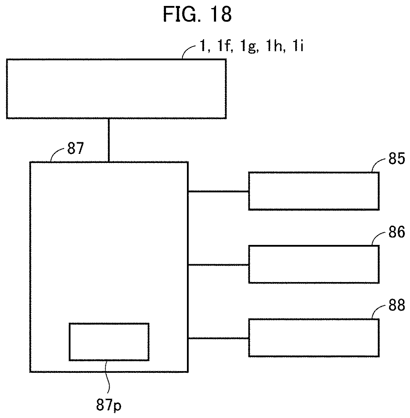

The following will discuss control of the spectroscopic analysis device 1 of Embodiment 1, with reference to Fig. 18. The spectroscopic analysis device 1 is controlled by a control section 87. The control section 87 is a computer which is configured to be capable of controlling the spectroscopic analysis device 1. The control section 87 includes a computing section 87p. The computing section 87p is configured to be capable of performing a numerical operation based on information which has been received by an input section 85 and which is stored in a storage section 88. The computing section 87p can be, for example, a processor configured to be capable of executing a program which is stored in the storage section 88. The control section 87 can output an operation result of the control section 87 to an output section 86.

The input section 85 is operated by a user. The input section 85 receives information from the user and sends the information to the control section 87. The information from the user can contain, for example, various data necessary for measurement of the concentration of the plurality of molecules 26 by using the spectroscopic analysis device 1, an instruction from the user, etc.

The output section 86 can be a display device configured to be capable of displaying letters, signs, images, and the like. The output section 86 can display, for example, the information which has been received by the input section 85, and the operation result of the control section 87 (for example, the concentration of the plurality of molecules 26, which concentration is obtained by the analyzing section 80 (e.g., the number of the plurality of molecules 26, and a volume of the at least one partial region of the sample 25 which is scanned by the optical scanning section (12, 14, 16, and 22; 19; or 19p) relatively moved)). The output section 86 can further display the image of the plurality of molecules 26, which image has been obtained by the imaging section 70.

The storage section 88 is configured to be capable of storing a program for spectroscopic analysis of the sample 25 by using the spectroscopic analysis device 1. The program is a program for causing the control section 87 (computer), which is configured to be capable of controlling the spectroscopic analysis device 1, to carry out the spectroscopic analysis method of Embodiment 1. The storage section 88 is a computer-readable storage medium storing therein the program. The program can be provided via a communication line and stored in the storage section 88. The storage section 88 can also store the information which has been received by the input section 85. The storage section 88 can be configured to be capable of further storing the volume of the at least one partial region of the sample 25 which region is scanned by the optical scanning section (12, 14, 16, and 22; 19; or 19p) relatively moved, or a distance of scanning performed by the optical scanning section (12, 14, 16, and 22; 19; or 19p). The storage section 88 is not particularly limited, and can be constituted by a rewritable nonvolatile storage device.

The spectroscopic analysis device 1 can include the control section 87. The spectroscopic analysis device 1 can include the storage section 88. Particularly, the spectroscopic analysis device 1 can include the input section 85, the output section 86, the control section 87, and the storage section 88. The spectroscopic analysis device 1 may not include the input section 85, the output section 86, the control section 87, and/or the storage section 88.

The spectroscopic analysis device 1 can include a microscope. The microscope of Embodiment 1 does not include the analyzing section 80.

The microscope of Embodiment 1 includes the observation objective lens 34, the irradiation objective lens 33, the lens holder 30, and the optical scanning section (12, 14, 16, and 22; 19; or 19p). The observation objective lens 34 is arranged so as to be capable of transmitting the emission light 38, which is emitted from the plurality of molecules 26 contained in the sample 25, 25d, or 25e supported by the sample supporting part 21. The irradiation objective lens 33 is arranged so as to be capable of transmitting the sheet light 37 toward the sample 25, 25d, or 25e. The observation objective lens 34 and the irradiation objective lens 33 can be provided on a side opposite to the sample 25, 25d, or 25e with respect to the sample supporting part 21. The optical scanning section (12, 14, 16, and 22; 19; or 19p) can be configured to be capable of relatively moving the observation plane of the observation objective lens 34 to scan at least one partial region of the sample 25, 25d, or 25e, in the first direction (x direction) and the second direction (y direction) which intersect with each other and in each of which the sample supporting surface of the sample supporting part 21 extends.

The lens holder 30 is configured to be capable of holding the observation objective lens 34 and the irradiation objective lens 33. The lens holder 30 fixes a relative position of the observation objective lens 34 with respect to the irradiation objective lens 33. The lens holder 30 can include the liquid retaining section 31. The liquid retaining section 31 is configured to be capable of retaining the refractive index matching liquid 40 which fills a space formed by the observation objective lens 34, the irradiation objective lens 33, and the sample supporting part 21.

The microscope of Embodiment 1 can further include the imaging section 70. The microscope of Embodiment 1 can further include the optical unit 50, the mirror 54f (see Fig. 2), the filter wheel 66, the condensing lens 56c, and the mirror 54e. The microscope of Embodiment 1 can further include the input section 85, the output section 86, the control section 87, and the storage section 88.

The following will discuss effects of the spectroscopic analysis device 1, the spectroscopic analysis method, the program, and the storage medium (the storage section 88) of Embodiment 1.

The spectroscopic analysis device 1 of Embodiment 1 includes the imaging section 70, the optical scanning section (12, 14, 16, and 22; 19; or 19p), and the analyzing section 80. The imaging section 70 is configured to be capable of imaging the plurality of molecules 26 at the single-molecule level by detecting the emission light 38 emitted from the plurality of molecules 26 which are contained in the sample 25, 25d, or 25e. The optical scanning section (12, 14, 16, and 22; 19; or 19p) is configured to be capable of relatively moving the conjugate plane 72 of the imaging plane 71 of the imaging section 70 to scan at least one partial region of the sample 25, 25d, or 25e. The analyzing section 80 is configured to be capable of obtaining the concentration of the plurality of molecules 26 by analyzing the image of the plurality of molecules 26, which image has been obtained by the imaging section 70.

In the spectroscopic analysis device 1 of Embodiment 1, the imaging section 70 is configured to be capable of imaging the plurality of molecules 26 contained in the sample 25, 25d, or 25e at the single-molecule level. Accordingly, the concentration of the plurality of molecules 26 can be accurately measured even in a case where the concentration of the plurality of molecules 26 in the sample 25, 25d, or 25e is a low concentration such as a concentration of the zM order or the aM order. Further, the optical scanning section (12, 14, 16, and 22; 19; or 19p) is configured to be capable of relatively moving the conjugate plane 72 of the imaging plane 71 of the imaging section 70 to scan the at least one partial region of the sample 25, 25d, or 25e. Accordingly, it is possible to measure the concentration of the plurality of molecules 26 in the sample 25, 25d, or 25e having a relatively large volume. The spectroscopic analysis device 1 of Embodiment 1 allows for accurate measurement of the concentration of the plurality of molecules 26 which are thinly distributed in at least one partial region of the sample 25, 25d, or 25e having a relatively large volume.

In the spectroscopic analysis device 1 of Embodiment 1, the at least one partial region of the sample 25, 25d, or 25e can include a region of the sample 25, 25d, or 25e which region is located at a distance d of not less than 500 nm from the sample supporting surface (first main surface 21r) of the sample supporting part 21 which supports the sample 25, 25d, or 25e. The spectroscopic analysis device 1 of Embodiment 1 allows for accurate measurement of the concentration of the plurality of molecules 26 which are thinly distributed in the sample 25, 25d, or 25e having a relatively large volume.

In the spectroscopic analysis device 1 of Embodiment 1, the at least one partial region of the sample 25, 25d, or 25e can have a volume of not less than 0.1 µL. The volume of not less than 10⁻¹⁰ m³ (10⁻¹ µL) is a volume at which it is possible to accurately measure the concentration of the plurality of molecules 26 which are thinly distributed, in the sample 25, 25d, or 25e, at a low concentration such as a concentration of not less than 1 × 10⁻²¹ M (1 zM) or not less than 1 × 10⁻¹⁸ M (1 aM). The volume of not less than 10⁻¹⁰ m³ (10⁻¹ µL) is a volume at which a quantity of the sample 25, 25d, or 25e can be easily determined by using a biochemical instrument such as a micropipette. The spectroscopic analysis device 1 of Embodiment 1 allows for accurate and easy measurement of the concentration of the plurality of molecules 26 which are thinly distributed in the sample 25, 25d, or 25e having a relatively large volume.

The spectroscopic analysis device 1 of Embodiment 1 can further include the observation objective lens 34 which is arranged so as to be capable of transmitting the emission light 38 toward the imaging section 70. The conjugate plane 72 of the imaging plane 71 can be the observation plane of the observation objective lens 34. The spectroscopic analysis device 1 of Embodiment 1 allows for accurate measurement of the concentration of the plurality of molecules 26 which are thinly distributed in at least one partial region of the sample 25, 25d, or 25e having a relatively large volume.

The spectroscopic analysis device 1 of Embodiment 1 can further include the optical unit 50 which is configured to be capable of emitting the sheet light 37 toward the sample 25, 25d, or 25e. The sheet light 37 can travel in the direction substantially parallel to the conjugate plane 72 of the imaging plane 71 of the imaging section 70. The sheet light 37 is capable of not only reducing background noise in imaging of the plurality of molecules 26 but also reducing color fading and phototoxicity of the plurality of molecules 26. Since the sheet light 37 travels in the direction substantially parallel to the conjugate plane 72 of the imaging plane 71 of the imaging section 70, generation of a non-uniform defocus is reduced in the conjugate plane 72 of the imaging plane 71 of the imaging section 70. This makes it possible to obtain a clear image of the plurality of molecules 26. The spectroscopic analysis device 1 of Embodiment 1 allows for more accurate measurement of the concentration of the plurality of molecules 26 which are thinly distributed in the sample 25, 25d, or 25e having a relatively large volume.

In the spectroscopic analysis device 1 of Embodiment 1, the optical unit 50 can include the axicon lens 60. The axicon lens 60 can distribute a plurality of focal points along an optical axis of the sheet light 37. This allows a broader area of the conjugate plane 72 of the imaging plane 71 of the imaging section 70 to be irradiated with the sheet light 37 more uniformly in terms of light intensity. The spectroscopic analysis device 1 of Embodiment 1 allows for accurate measurement of the concentration of the plurality of molecules 26 which are thinly distributed in the sample 25, 25d, or 25e having a relatively large volume.

In the spectroscopic analysis device 1 of Embodiment 1, the observation objective lens 34 and the optical unit 50 can be provided on the side opposite to the sample 25 with respect to the sample supporting part 21 supporting the sample 25, 25d, or 25e. This allows the sample 25, 25d, or 25e to be open upward, so that a size of the sample 25, 25d, or 25e is not limited to a range of a working distance of the observation objective lens 34. Further, while the spectroscopic analysis device 1 is used, the irradiation objective lens 33 and the observation objective lens 34 are prevented from coming in contact with the sample 25, 25d, or 25e. This makes it possible to keep the irradiation objective lens 33 and the observation objective lens 34 clean. Accordingly, it is possible to measure the concentration of the plurality of molecules 26 contained in the sample 25, 25d, or 25e having a relatively large volume, without restriction in size and phase (liquid phase or solid phase) of the sample 25, 25d, or 25e. The spectroscopic analysis device 1 of Embodiment 1 has an improved usability.

The spectroscopic analysis device 1 in accordance with Embodiment 1 can further include the lens holder 30. The optical unit 50 includes the irradiation objective lens 33 which is arranged so as to be capable of transmitting the sheet light 37 toward sample 25, 25d, or 25e. The lens holder 30 retains the observation objective lens 34 and the irradiation objective lens 33, so that a relative position of the observation objective lens 34 with respect to the irradiation objective lens 33 is fixed. This reduces a change over time of an angle between the first optical axis 33a of the irradiation objective lens 33 and the second optical axis 34a of the observation objective lens 34, which change is caused by a difference in coefficient of thermal expansion among a plurality of members constituting the spectroscopic analysis device 1. The spectroscopic analysis device 1 of Embodiment 1 allows for accurate and stable measurement of the concentration of the plurality of molecules 26 which are thinly distributed in the sample 25, 25d, or 25e having a relatively large volume.

In the spectroscopic analysis device 1 of Embodiment 1, the lens holder 30 can include the liquid retaining section 31. The liquid retaining section 31 is configured to be capable of retaining the refractive index matching liquid 40 which fills a space formed by the observation objective lens 34, the irradiation objective lens 33, and the sample supporting part 21. This reduces asymmetric aberration which occurs in the optical path of the sheet light 37 and in the optical path of the emission light 38. This increases the numerical aperture of the irradiation objective lens 33 serving as an immersion lens and the numerical aperture of the observation objective lens 34 serving as another immersion lens. The spectroscopic analysis device 1 of Embodiment 1 allows for more accurate measurement of the concentration of the plurality of molecules 26 which are thinly distributed in the sample 25, 25d, or 25e having a relatively large volume.

The spectroscopic analysis method of Embodiment 1 includes obtaining an image of the plurality of molecules 26, by imaging the plurality of molecules 26 at the single-molecule level concurrently with relatively moving the conjugate plane 72 of the imaging plane 71 of the imaging section 70 to scan at least one partial region of the sample 25, 25d, or 25e containing the plurality of molecules 26 (S1). The spectroscopic analysis method of Embodiment 1 further includes obtaining the concentration of the plurality of molecules 26 by analyzing the image of the plurality of molecules 26 (S2). The spectroscopic analysis method of Embodiment 1 allows for accurate measurement of the concentration of the plurality of molecules 26 which are thinly distributed in the at least one partial region of the sample 25, 25d, or 25e having a relatively large volume.

The program of Embodiment 1 is a program to be executed by a computer (the control section 87), the program causing the computer (the control section 87) to carry out the spectroscopic analysis method of Embodiment 1. In the computer-readable storage medium (the storage section 88) of Embodiment 1, the program of Embodiment 1 is stored. The program and the computer-readable storage medium (the storage section 88) of Embodiment 1 allow for accurate measurement of the concentration of the plurality of molecules 26 which are thinly distributed in at least one partial region of the sample 25, 25d, or 25e having a relatively large volume.

The microscope of Embodiment 1 includes the observation objective lens 34, the irradiation objective lens 33, the lens holder 30, and the optical scanning section (12, 14, 16, and 22; 19; or 19p). The observation objective lens 34 is arranged so as to be capable of transmitting the emission light 38, which is emitted from the plurality of molecules 26 contained in the sample 25, 25d, or 25e supported by the sample supporting part 21. The irradiation objective lens 33 is arranged so as to be capable of transmitting the sheet light 37 toward the sample 25, 25d, or 25e. The observation objective lens 34 and the irradiation objective lens 33 can be provided on the side opposite to the sample 25, 25d, or 25e with respect to the sample supporting part 21. The optical scanning section (12, 14, 16, and 22; 19; or 19p) can be configured to be capable of relatively moving the observation plane of the observation objective lens 34 to scan at least one partial region of the sample 25, 25d, or 25e, in the first direction (x direction) and the second direction (y direction) which intersect with each other and in each of which the sample supporting surface (the first main surface 21r) of the sample supporting part 21 extends.

The lens holder 30 is configured to be capable of holding the observation objective lens 34 and the irradiation objective lens 33. The lens holder 30 fixes a relative position of the observation objective lens 34 with respect to the irradiation objective lens 33. The lens holder 30 can include the liquid retaining section 31. The liquid retaining section 31 is configured to be capable of retaining the refractive index matching liquid 40 which fills a space formed by the observation objective lens 34, the irradiation objective lens 33, and the sample supporting part 21.

In the microscope of Embodiment 1, the lens holder 30 fixes a relative position of the observation objective lens 34 with respect to the irradiation objective lens 33. This reduces a change over time of an angle between the first optical axis 33a of the irradiation objective lens 33 and the second optical axis 34a of the observation objective lens 34, which change is caused by a difference in coefficient of thermal expansion among a plurality of members constituting the spectroscopic analysis device 1. Further, the lens holder 30 includes the liquid retaining section 31. The liquid retaining section 31 is configured to be capable of retaining the refractive index matching liquid 40. This reduces asymmetric aberration which occurs in the optical path of the sheet light 37 and in the optical path of the emission light 38. This increases the numerical aperture of the irradiation objective lens 33 serving as an immersion lens and the numerical aperture of the observation objective lens 34 serving as another immersion lens. The microscope of Embodiment 1 allows for accurate and stable observation of the plurality of molecules 26 which are thinly distributed in the sample 25, 25d, or 25e having a relatively large volume.

### (Embodiment 2)

The following will discuss a spectroscopic analysis device 1f in accordance with Embodiment 2, with reference to Fig. 19. The spectroscopic analysis device 1f includes members similar to those in the spectroscopic analysis device 1 of Embodiment 1. However, the spectroscopic analysis device 1f is different mainly in the following points from the spectroscopic analysis device 1 of Embodiment 1.

A sample 25f includes a plurality of molecules 26f. The plurality of molecules 26f include a plurality of first molecules 27a and a plurality of second molecules 27b which are different from the plurality of first molecules 27a. The plurality of first molecules 27a each can emit first output light 38a. The plurality of second molecules 27b each can emit second output light 38b. Emission light 38 contains the first output light 38a and the second output light 38b. The first output light 38a is different in luminance or half-life (color fading time) from the second output light 38b.

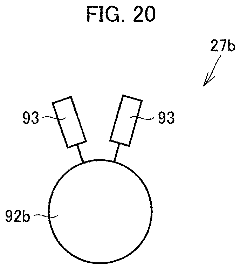

The plurality of first molecules 27a can be each a first biological molecule 92 labeled with a first fluorescent substance 93, as illustrated in Fig. 16. The plurality of second molecules 27b can be each a second biological molecule 92b labeled with the first fluorescent substance 93, as illustrated in Fig. 20. The first fluorescent substance 93 with which the second biological molecule 92b is labeled is different in amount from the first fluorescent substance 93 with which the first biological molecule 92 is labeled. Accordingly, in a case where the plurality of first molecules 27a and the plurality of second molecules 27b are irradiated with the sheet light 37, the second output light 38b emitted from the plurality of second molecules 27b is different in luminance from the first output light 38a emitted from the plurality of first molecules 27a.

An image of the plurality of molecules 26 includes a first molecule image in which the plurality of first molecules 27a are imaged at a single-molecule level and a second molecule image in which the plurality of second molecules 27b are imaged at a single-molecule level. The first molecule image is formed by the first output light 38a. The second molecule image is formed by the second output light 38b.

An analyzing section 80 is configured to be capable of individually obtaining a first concentration of the plurality of first molecules and a second concentration of the plurality of second molecules, on the basis of a difference in luminance between the first output light 38a and the second output light 38b. It is possible to obtain a concentration of the plurality of molecules 26 for each type of the plurality of molecules 26, by sorting the plurality of molecules 26 into each type of the plurality of molecules 26 (the plurality of first molecules 27a and the plurality of second molecules 27b) depending on a luminance of the emission light 38 emitted from each of the plurality of molecules 26. The analyzing section 80 is configured to be capable of obtaining a temporal change and a spatial variation of the concentration of the plurality of molecules 26 for the each type (the plurality of first molecules 27a and the plurality of second molecules 27b) of the plurality of molecules 26. An output section 86 (see Fig. 18) can display the first concentration of the plurality of first molecules 27a and the second concentration of the plurality of second molecules 27b, which first concentration and second concentration have been obtained by the analyzing section 80.

The following will discuss a spectroscopic analysis method of Embodiment 2, with reference to Figs. 17 and 19. The spectroscopic analysis method of Embodiment 2 includes steps similar to those in the spectroscopic analysis method of Embodiment 1. However, the spectroscopic analysis method of Embodiment 2 is different mainly in the following points from the spectroscopic analysis method of Embodiment 1. In the spectroscopic analysis method of Embodiment 2, obtaining the concentration of the plurality of molecules 26 (S2) includes individually obtaining the first concentration of the plurality of first molecules 27a and the second concentration of the plurality of second molecules 27b, on the basis of the difference in luminance between the first output light 38a and the second output light 38b.

A program of Embodiment 2 is a program to be executed by a computer (control section 87, see Fig. 18), the program causing the computer (the control section 87) to carry out the spectroscopic analysis method of Embodiment 2. In a computer-readable storage medium (the storage section 88, see Fig. 18) of Embodiment 2, the program of Embodiment 2 is stored. The program and the computer-readable storage medium (the storage section 88) of Embodiment 2 make it possible to individually and efficiently measure the first concentration of the plurality of first molecules 27a and the second concentration of the plurality of second molecules 27b concurrently with sorting the plurality of molecules 26f into the plurality of first molecules 27a and the plurality of second molecules 27b. The plurality of first molecules 27a and the plurality of second molecules 27b measured here are thinly distributed in at least one partial region of the sample 25f.

The following will discuss effects of the spectroscopic analysis device 1f and the spectroscopic analysis method of Embodiment 2. The spectroscopic analysis device 1f and the spectroscopic analysis method of Embodiment 2 yield the following effects in addition to the effects yielded by the spectroscopic analysis device 1 and the spectroscopic analysis method of Embodiment 1.

In the spectroscopic analysis device 1f of Embodiment 2, the plurality of molecules 26f include the plurality of first molecules 27a and the plurality of second molecules 27b which are different from the plurality of first molecules 27a. The plurality of first molecules 27a each can emit the first output light 38a. The plurality of second molecules 27b each can emit the second output light 38b. The emission light 38 contains the first output light 38a and the second output light 38b. The first output light 38a is different in luminance from the second output light 38b. The image of the plurality of molecules 26 includes the first molecule image in which the plurality of first molecules 27a are imaged at the single-molecule level and the second molecule image in which the plurality of second molecules 27b are imaged at the single-molecule level. The first molecule image is formed by the first output light 38a. The second molecule image is formed by the second output light 38b. The analyzing section 80 is configured to be capable of individually obtaining the first concentration of the plurality of first molecules and the second concentration of the plurality of second molecules, on the basis of the difference in luminance between the first output light 38a and the second output light 38b.

The spectroscopic analysis device 1f of Embodiment 2 makes it possible to individually and efficiently measure the first concentration of the plurality of first molecules 27a and the second concentration of the plurality of second molecules 27b concurrently with sorting the plurality of molecules 26f into the plurality of first molecules 27a and the plurality of second molecules 27b. The plurality of first molecules 27a and the plurality of second molecules 27b measured here are thinly distributed in at least one partial region of the sample 25f.

In the spectroscopic analysis method of Embodiment 2, the plurality of molecules 26 include the plurality of first molecules 27a and the plurality of second molecules 27b which are different from the plurality of first molecules 27a. The plurality of first molecules 27a each can emit the first output light 38a. The plurality of second molecules 27b each can emit the second output light. The image of the plurality of molecules 26f includes the first molecule image in which the plurality of first molecules 27a are imaged at the single-molecule level and the second molecule image in which the plurality of second molecules 27b are imaged at the single-molecule level. The first molecule image is formed by the first output light 38a. The second molecule image is formed by the second output light 38b. Obtaining the concentration of the plurality of molecules 26 (S2) includes individually obtaining the first concentration of the plurality of first molecules 27a and the second concentration of the plurality of second molecules 27b, on the basis of the difference in luminance between the first output light 38a and the second output light 38b.

The spectroscopic analysis method of Embodiment 2 makes it possible to individually and efficiently measure the first concentration of the plurality of first molecules 27a and the second concentration of the plurality of second molecules 27b concurrently with sorting the plurality of molecules 26f into the plurality of first molecules 27a and the plurality of second molecules 27b. The plurality of first molecules 27a and the plurality of second molecules 27b measured here are thinly distributed in at least one partial region of the sample 25f.

### (Embodiment 3)

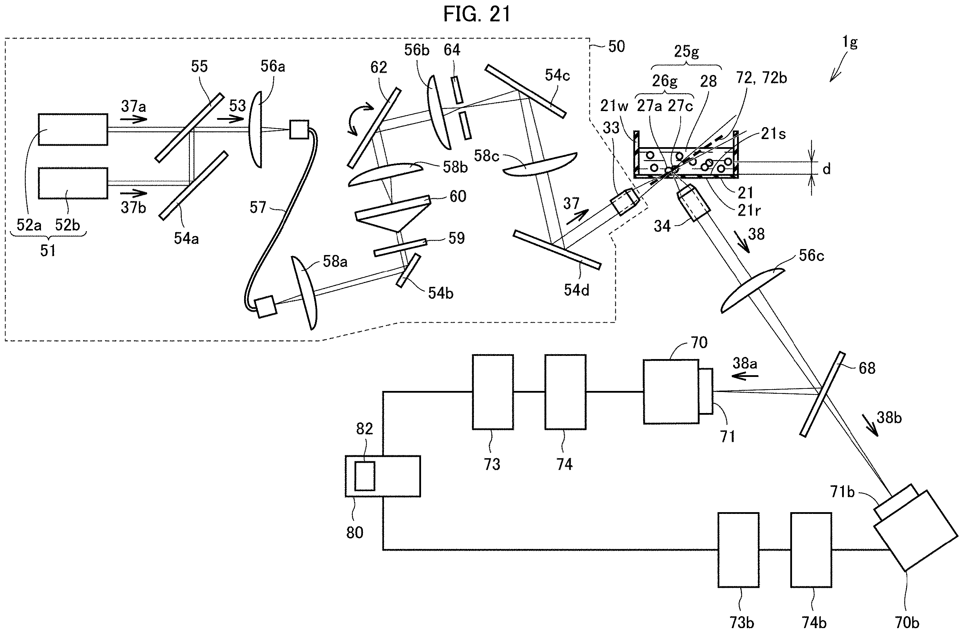

The following will discuss a spectroscopic analysis device 1g in accordance with Embodiment 3, with reference to Fig. 21. The spectroscopic analysis device 1g includes members similar to those in the spectroscopic analysis device 1f of Embodiment 2. However, the spectroscopic analysis device 1g is different mainly in the following points from the spectroscopic analysis device 1f of Embodiment 2.

A sample 25g includes a plurality of molecules 26g. The plurality of molecules 26g includes a plurality of first molecules 27a and a plurality of second molecules 27c which are different from the plurality of first molecules 27a. The plurality of first molecules 27a each can emit first output light 38a. The plurality of second molecules 27c each can emit second output light 38b. Emission light 38 contains the first output light 38a and the second output light 38b. The first output light 38a is different in wavelength from the second output light 38b.

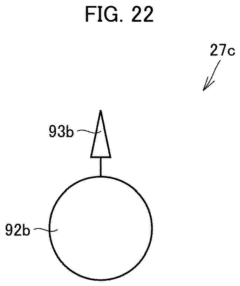

As illustrated in Fig. 16, the plurality of first molecules 27a can be each a first biological molecule 92 labeled with a first fluorescent substance 93. As illustrated in Fig. 22, the plurality of second molecules 27c can be each a second biological molecule 92b labeled with a second fluorescent substance 93b. The second fluorescent substance 93b is different in kind from the first fluorescent substance 93. When the first fluorescent substance 93 is irradiated with first input light 37a, the first fluorescent substance 93 emits the first output light 38a, but the second fluorescent substance 93b does not emit light. On the other hand, when the second fluorescent substance 93 is irradiated with second input light 37b, the second fluorescent substance 93b emits the second output light 38b, but the first fluorescent substance 93 does not emit light.

In Embodiment 2, a color separation mirror 68 is provided in place of the filter wheel 66 and the mirror 54e of Embodiment 1. The emission light 38 having exited from a condensing lens 56c is caused to enter the color separation mirror 68. The color separation mirror 68 separates the emission light 38 into the first output light 38a and the second output light 38b. The color separation mirror 68 can reflect the first output light 38a and transmit the second output light 38b. The first output light 38a is caused to enter an imaging section 70. The second output light 38b is caused to enter an imaging section 70b.

An imaging section (imaging sections 70 and 70b) is configured to be capable of detecting the first output light 38a and the second output light 38b, and outputting an image of the plurality of molecules 26. The image of the plurality of molecules 26 includes a first molecule image in which the plurality of first molecules 27a are imaged at a single-molecule level and a second molecule image in which the plurality of second molecules 27c are imaged at a single-molecule level. The first molecule image is formed by the first output light 38a. The second molecule image is formed by the second output light 38b.

Specifically, the imaging section 70 is configured to be capable of detecting the first output light 38a emitted from the plurality of first molecules 27a and outputting the first molecule image. The imaging section 70 can be, for example, a CCD camera or a CMOS camera. The imaging section 70 has an imaging plane 71. The first molecule image can include, for example, a dot image of the plurality of first molecules 27a (bright spots of the plurality of first molecules 27a). The dot image of the plurality of first molecules 27a is an image suitable for counting the number of the plurality of first molecules 27a. An image processing section 73 can be configured to be capable of binarizing the first molecule image. A low-pass filter 74 removes a high-frequency component contained in the first molecule image, and outputs, to the image processing section 73, the first molecule image from which the high-frequency component has been removed.

The imaging section 70b is configured to be capable of detecting the second output light 38b emitted from the plurality of second molecules 27c and outputting the second molecule image. The imaging section 70b can be, for example, a CCD camera or a CMOS camera. The imaging section 70b includes an imaging plane 71b. The second molecule image can include, for example, a dot image of the plurality of second molecules 27c (bright spots of the plurality of second molecules 27c). The dot image of the plurality of second molecules 27c is an image suitable for counting the number of the plurality of second molecules 27c. The spectroscopic analysis device 1g of Embodiment 3 can include the image processing section 73b. The image processing section 73b can be configured to be capable of binarizing the second molecule image. The spectroscopic analysis device 1g of Embodiment 3 can further include a low-pass filter 74b. The low-pass filter 74 removes a high-frequency component contained in the second molecule image, and outputs, to the image processing section 73b, the second molecule image from which the high-frequency component has been removed.

An optical scanning section (see Figs. 2 to 4) is configured to be capable of relatively moving conjugate planes 72 and 72b of the imaging planes 71 and 71b of the imaging sections 70 and 70b to scan at least one partial region of the sample 25g. In the present specification, the conjugate plane 72b of the imaging plane 71b means a plane which is optically conjugate to the imaging plane 71b in an exit-side optical system (including an observation objective lens 34, the condensing lens 56c, etc. in Embodiment 3) which is present between the sample 25g and the imaging plane 71b. The conjugate plane 72b of the imaging plane 71b can coincide with an observation plane (focal plane) of the observation objective lens 34. The conjugate plane 72b of the imaging plane 71b can coincide with the conjugate plane 72 of the imaging plane 71.

An analyzing section 80 is connected to the imaging section (imaging sections 70 and 70b). The analyzing section 80 is configured to be capable of individually obtaining a first concentration of the plurality of first molecules and a second concentration of the plurality of second molecules, on the basis of a difference in wavelength between the first output light 38a and the second output light 38b. Specifically, the analyzing section 80 is configured to be capable of obtaining, from the first molecule image, the first concentration of the plurality of first molecules 27a contained in the at least one partial region of the sample 25g. The analyzing section 80 is configured to be capable of obtaining, from the second molecule image, the second concentration of the plurality of second molecules 27c contained in the at least one partial region of the sample 25g.

The analyzing section 80 can be configured to be capable of obtaining a concentration of the plurality of molecules 26 for each type of the plurality of molecules, by sorting the plurality of molecules 26 into each type of the plurality of molecules 26 (the plurality of first molecules 27a and the plurality of second molecules 27c) depending on a wavelength of the emission light 38 emitted from each of the plurality of molecules 26. The analyzing section 80 is configured to be capable of obtaining a temporal change and a spatial variation of the concentration of the plurality of molecules 26 for the each type (the plurality of first molecules 27a and the plurality of second molecules 27c) of the plurality of molecules 26. An output section 86 (see Fig. 18) can display the first concentration of the plurality of first molecules 27a and the second concentration of the plurality of second molecules 27c, which first concentration and second concentration have been obtained by the analyzing section 80.

In a Variation of Embodiment 3, the first concentration of the plurality of first molecules and the second concentration of the plurality of second molecules can be individually obtained on the basis of a difference in polarization between the first output light 38a and the second output light 38b. In the Variation of Embodiment 3, a polarizing beam splitter is used in place of the color separation mirror 68.

The following will discuss a spectroscopic analysis method of Embodiment 3, with reference to Figs. 17 and 21. The spectroscopic analysis method of Embodiment 3 includes steps similar to those in the spectroscopic analysis method of Embodiment 2. However, the spectroscopic analysis method of Embodiment 3 is different mainly in the following points from the spectroscopic analysis method of Embodiment 2. Obtaining the concentration of the plurality of molecules 26 (S2) includes individually obtaining the first concentration of the plurality of first molecules 27a and the second concentration of the plurality of second molecules 27c, on the basis of the difference in at least one of wavelength and polarization between the first output light 38a and the second output light 38b.

A program of Embodiment 3 is a program to be executed by a computer (control section 87, see Fig. 18), the program causing the computer (the control section 87) to carry out the spectroscopic analysis method of Embodiment 3. In a computer-readable storage medium (the storage section 88, see Fig. 18) of Embodiment 3, the program of Embodiment 3 is stored. The program and the computer-readable storage medium (the storage section 88) of Embodiment 3 make it possible to individually and efficiently measure the first concentration of the plurality of first molecules 27a and the second concentration of the plurality of second molecules 27c concurrently with sorting the plurality of molecules 26 into the plurality of first molecules 27a and the plurality of second molecules 27c. The plurality of first molecules 27a and the plurality of second molecules 27c measured here are thinly distributed in at least one partial region of the sample 25g.

The following will discuss effects of the spectroscopic analysis device 1g and the spectroscopic analysis method of Embodiment 3. The spectroscopic analysis device 1g and the spectroscopic analysis method of Embodiment 3 yield the following effects similar to those yielded by the spectroscopic analysis device 1f and the spectroscopic analysis method of Embodiment 2.

In the spectroscopic analysis device 1g of Embodiment 3, the plurality of molecules 26f include the plurality of first molecules 27a and the plurality of second molecules 27c which are different from the plurality of first molecules 27a. The plurality of first molecules 27a each can emit the first output light 38a. The plurality of second molecules 27c each can emit the second output light 38b. The emission light 38 contains the first output light 38a and the second output light 38b. The first output light 38a is different in at least one of wavelength and polarization from the second output light 38b. The image of the plurality of molecules 26 includes the first molecule image in which the plurality of first molecules 27a are imaged at the single-molecule level and the second molecule image in which the plurality of second molecules 27c are imaged at the single-molecule level. The first molecule image is formed by the first output light 38a. The second molecule image is formed by the second output light 38b. The analyzing section 80 is configured to be capable of individually obtaining the first concentration of the plurality of first molecules and the second concentration of the plurality of second molecules, on the basis of the difference in at least one of wavelength and polarization between the first output light 38a and the second output light 38b.

The spectroscopic analysis device 1g of Embodiment 3 makes it possible to individually and efficiently measure the first concentration of the plurality of first molecules 27a and the second concentration of the plurality of second molecules 27c concurrently with sorting the plurality of molecules 26g into the plurality of first molecules 27a and the plurality of second molecules 27c. The plurality of first molecules 27a and the plurality of second molecules 27c measured here are thinly distributed in at least one partial region of the sample 25g.

In the spectroscopic analysis method of Embodiment 3, the plurality of molecules 26 include the plurality of first molecules 27a and the plurality of second molecules 27c which are different from the plurality of first molecules 27a. The plurality of first molecules 27a each can emit the first output light 38a. The plurality of second molecules 27c each can emit the second output light. The image of the plurality of molecules 26 includes the first molecule image in which the plurality of first molecules 27a are imaged at the single-molecule level and the second molecule image in which the plurality of second molecules 27c are imaged at the single-molecule level. The first molecule image is formed by the first output light 38a. The second molecule image is formed by the second output light 38b. Obtaining the concentration of the plurality of molecules 26 (S2) includes individually obtaining the first concentration of the plurality of first molecules 27a and the second concentration of the plurality of second molecules 27c, on the basis of the difference in at least one of wavelength and polarization between the first output light 38a and the second output light 38b.

The spectroscopic analysis method of Embodiment 3 makes it possible to individually and efficiently measure the first concentration of the plurality of first molecules 27a and the second concentration of the plurality of second molecules 27c concurrently with sorting the plurality of molecules 26g into the plurality of first molecules 27a and the plurality of second molecules 27c. The plurality of first molecules 27a and the plurality of second molecules 27c measured here are thinly distributed in at least one partial region of the sample 25g.

### (Embodiment 4)

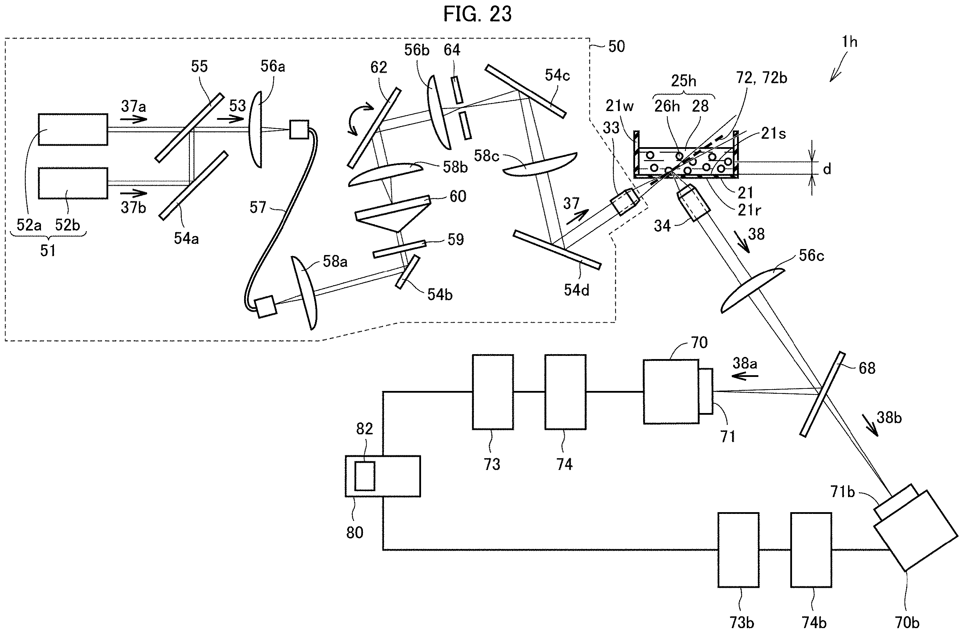

The following will discuss a spectroscopic analysis device 1h in accordance with Embodiment 4, with reference to Fig. 23. The spectroscopic analysis device 1h includes members similar to those in the spectroscopic analysis device 1g of Embodiment 3. However, the spectroscopic analysis device 1h is different mainly in the following points from the spectroscopic analysis device 1g of Embodiment 3.

A sample 25h includes a plurality of molecules 26h. The plurality of molecules 26h each can emit first output light 38a and second output light 38b. Emission light 38 contains the first output light 38a and the second output light 38b. The second output light 38b is different in wavelength from the first output light 38a. For example, as illustrated in Fig. 24, the plurality of molecules 26h can be each a first biological molecule 92, which is labeled with a first fluorescent substance 93 and a second fluorescent substance 93b. The second fluorescent substance 93b is different in kind from the first fluorescent substance 93.

For example, when the first fluorescent substance 93 is irradiated with sheet light 37, the first fluorescent substance 93 emits the first output light 38a and the second fluorescent substance 93b can emit the second output light 38b. Specifically, the sheet light 37 can contain first input light 37a and second input light 37b. The second input light 37b can be different in wavelength from the first input light 37a. When the first fluorescent substance 93 is irradiated with the first input light 37a, the first fluorescent substance 93 emits the first output light 38a. When the second fluorescent substance 93 is irradiated with the second input light 37b, the second fluorescent substance 93b emits the second output light 38b.

An imaging section (imaging sections 70 and 70b) is configured to be capable of detecting the first output light 38a and the second output light 38b, and outputting an image of the plurality of molecules 26h. The image of the plurality of molecules 26h is formed by the first output light and the second output light. The imaging section 70 outputs, to an analyzing section 80, the image of the plurality of molecules 26h which image is formed by the first output light 38a. The imaging section 70b outputs, to the analyzing section 80, an image of the plurality of molecules 26h which image is formed by the second output light 38b. The analyzing section 80 is configured to be capable of obtaining a concentration of the plurality of molecules 26h from the image of the plurality of molecules 26h, which image is formed by the first output light 38a and the second output light 38b. An output section 86 (see Fig. 18) can display the concentration of the plurality of molecules 26h (e.g., the number of the plurality of molecules 26h, and a volume of the at least one partial region of the sample 25 which is scanned by the optical scanning section (12, 14, 16, and 22; 19; or 19p) relatively moved), which concentration has been obtained by the analyzing section 80.

The following will discuss a spectroscopic analysis method of Embodiment 4, with reference to Figs. 17 and 23. The spectroscopic analysis method of Embodiment 4 includes steps similar to those in the spectroscopic analysis method of Embodiment 1. However, the spectroscopic analysis method of Embodiment 4 is different mainly in the following points from the spectroscopic analysis method of Embodiment 1. In the spectroscopic analysis method of Embodiment 4, obtaining the concentration of the plurality of molecules 26h (S2) includes obtaining the concentration of the plurality of molecules 26h from the image of the plurality of molecules 26h which image is formed by the first output light 38a and the second output light 38b.

A program of Embodiment 4 is a program to be executed by a computer (control section 87, see Fig. 18), the program causing the computer (the control section 87) to carry out the spectroscopic analysis method of Embodiment 4. In a computer-readable storage medium (the storage section 88, see Fig. 18) of Embodiment 4, the program of Embodiment 4 is stored. The program and the computer-readable storage medium (the storage section 88) of Embodiment 4 make it possible to accurately measure the concentration of the plurality of molecules 26h concurrently with sorting the plurality of molecules 26h into the plurality of first molecules 27a and the plurality of second molecules 27c. The plurality of first molecules 27a and the plurality of second molecules 27c measured here are thinly distributed in at least one partial region of the sample 25g.

The following will discuss effects of the spectroscopic analysis device 1h and the spectroscopic analysis method of Embodiment 4. The spectroscopic analysis device 1h of Embodiment 4 yields the following effects similar to those yielded by the spectroscopic analysis device 1 of Embodiment 1.

In the spectroscopic analysis device 1h and the spectroscopic analysis method of Embodiment 4, the plurality of molecules 26h each can emit the first output light 38a and the second output light 38b. The emission light 38 contains the first output light 38a and the second output light 38b. The first output light 38a is different in wavelength from the second output light 38b. The image of the plurality of molecules 26h is formed by the first output light 38a and the second output light 38b. The spectroscopic analysis device 1h and the spectroscopic analysis method of Embodiment 4 allow for accurate measurement of the concentration of the plurality of molecules 26h which are thinly distributed in at least one partial region of a sample 25 having a relatively large volume.

### (Embodiment 5)

The following will discuss a spectroscopic analysis device 1i in accordance with Embodiment 5, with reference to Figs. 25 and 26. The spectroscopic analysis device 1i includes members similar to those in the spectroscopic analysis device 1 of Embodiment 1. However, the spectroscopic analysis device 1i is different mainly in the following points from the spectroscopic analysis device 1 of Embodiment 1.

A sample supporting part (21, 21w, and 23) supporting samples 25 is a multi-well plate (21, 21w, and 23) including a plurality of wells 24. The plurality of wells 24 are separated from each other by a wall 23. The samples 25 are contained in the plurality of wells 24. The samples 25 contained in the plurality of wells 24 can be identical to each other or different from each other.

An optical scanning section (12, 14, 16, and 22; or 19; see Figs. 2, 3, 8, and 25) is configured to be capable of relatively moving sheet light 37 to scan the samples 25, in a first direction (x direction) and a second direction (y direction). In one example, the optical scanning section (12, 14, 16, and 22) can include a moving section (12, 14, and 16) which is configured to be capable of moving the sample supporting part (21, 21w, and 23) in the first direction (x direction) and the second direction (y direction) as in Embodiment 1. In another example, the optical scanning section (19) can include a moving section 19 which is configured to be capable of moving a lens holder 30 in the first direction (x direction) and the second direction (y direction) as in the First Variation of Embodiment 1. In this way, it is possible to relatively move a conjugate plane 72 of an imaging plane 71 of an imaging section 70 or an observation plane of an observation objective lens 34 to scan at least one partial region of a sample 25 in one well 24. It is possible to move the conjugate plane 72 of the imaging plane 71 of the imaging section 70 or the observation plane of the observation objective lens 34 between wells 24.

The following will discuss a spectroscopic analysis method of Embodiment 5.

While the conjugate plane 72 of the imaging plane 71 (see Fig. 1) of the imaging section 70 (see Fig. 1) are relatively moved, by the optical scanning section (12, 14, 16, and 22; or 19), to scan a sample 25 contained in one well 24, the imaging section 70 detects emission light 38 which is emitted from a plurality of molecules 26 contained in the one well 24. Particularly, while the sheet light 37 is relatively moved to scan the sample 25 contained in the one well 24, the imaging section 70 detects the emission light 38 which is emitted from the plurality of molecules 26 contained in the one well 24. The imaging section 70 outputs an image of the plurality of molecules 26 which image is formed by the emission light 38. The plurality of molecules 26 are imaged at a single-molecule level in the image of the plurality of molecules 26. From the image of the plurality of molecules 26 contained in the sample 25 in the one well 24, a concentration of the plurality of molecules 26 in the sample 25 in the one well 24 is obtained by using an analyzing section 80 (see Fig. 1).

Then, the optical scanning section (12, 14, 16, and 22; or 19) causes another sample 25 contained in another well 24 to be irradiated with the sheet light 37. In one example, it is possible to cause the another sample 25 contained in the another well 24 to be irradiated with the sheet light 37, by moving the sample supporting part (21, 21w, and 23) with use of the moving section (12, 14, and 16) in at least one of the first direction (x direction) and the second direction (y direction), as in Embodiment 1. In another example, it is possible to cause the another sample 25 contained in the another well 24 to be irradiated with the sheet light 37, by moving the lens holder 30 with use of the moving section 19 in at least one of the first direction (x direction) and the second direction (y direction), as in the First Variation of Embodiment 1.

Further, while the conjugate plane 72 of the imaging plane 71 of the imaging section 70 is relatively moved, by the optical scanning section (12, 14, 16, and 22; or 19), to scan the another sample 25 contained in the another well 24, the emission light 38 emitted from another plurality of molecules 26 contained in the another well 24 is detected by the imaging section 70. Particularly, while the sheet light 37 is relatively moved to scan the another sample 25 contained in the another well 24, the imaging section 70 detects the emission light 38 which is emitted from the another plurality of molecules 26 contained in the another well 24. The imaging section 70 outputs an image of the another plurality of molecules 26 which image is formed by the emission light 38. The another plurality of molecules 26 are imaged at the single-molecule level in the image of the another plurality of molecules 26. From the image of the another plurality of molecules 26 contained in the another sample 25 in the another well 24, a concentration of the another plurality of molecules 26 in the another sample 25 in the another well 24 is obtained by using the analyzing section 80 (see Fig. 1).

The above-described steps are repeated. In this way, a concentration of a plurality of molecules 26 contained in a sample 25 in each of the plurality of wells 24 can be individually obtained by using the spectroscopic analysis device 1i.

A program of Embodiment 5 is a program to be executed by a computer (control section 87, see Fig. 18), the program causing the computer (the control section 87) to carry out the spectroscopic analysis method of Embodiment 5. In a computer-readable storage medium (the storage section 88, see Fig. 18) of Embodiment 5, the program of Embodiment 5 is stored. The program and the computer-readable storage medium (the storage section 88) of Embodiment 5 allow for accurate and efficient measurement of the concentration of the plurality of molecules 26 contained in the sample 25 in each of the plurality of wells 24.

As illustrated in Fig. 27, the spectroscopic analysis device 1i and the spectroscopic analysis method of Embodiment 5 can be applied for individually analyzing a plurality of cells 100. Specifically, one cell 100 is contained in each of the plurality of wells 24. The plurality of molecules 26 which are each a protein is contained in at least one of the plurality of cells 100. Each of the plurality of cells 100 are subjected to measurement of the concentration of the plurality of molecules 26 by a method similar to that described above.

The spectroscopic analysis device 1i makes it possible to analyze a protein (molecule 26)-containing state, with regard to each of the plurality of cells 100. For example, immediately after at least some of the plurality of cells 100 are infected by a virus, a protein (molecule 26) originating from the virus is contained at a very low concentration in the some of the plurality of cells 100. The spectroscopic analysis device 1i makes it possible to accurately measure the concentration of the protein (molecule 26) contained in the plurality of cells 100. Accordingly, it is possible to accurately and efficiently analyze the presence of virus infection and a level of that infection, with regard to each of the plurality of cells 100.

The following will discuss effects of the spectroscopic analysis device 1i and the spectroscopic analysis method of Embodiment 5. The spectroscopic analysis device 1i and the spectroscopic analysis method of Embodiment 5 yield the following effects in addition to the effects yielded by the spectroscopic analysis device 1 and the spectroscopic analysis method of Embodiment 1. The spectroscopic analysis device 1i and the spectroscopic analysis method of Embodiment 5 allow for accurate and efficient measurement of the concentration of the plurality of molecules 26 contained in the sample 25 in each of the plurality of wells 24. Note that in Variations of the spectroscopic analysis device 1i and the spectroscopic analysis method of Embodiment 5, the plurality of samples 25 are provided so as to be spaced apart from each other on a plurality of regions of the sample supporting part 21 which is not provided with the wall 23.

### (Embodiment 6)

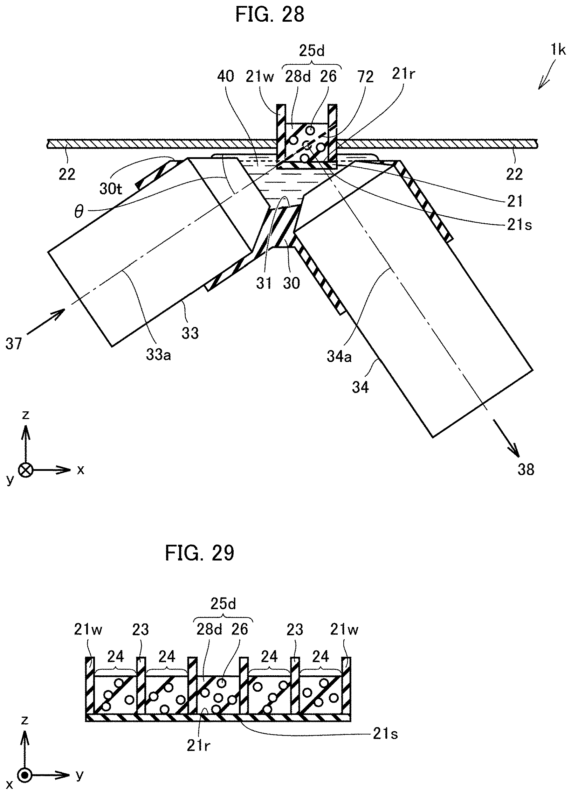

The following will discuss a spectroscopic analysis device 1k in accordance with Embodiment 6, with reference to Figs. 28 and 29. The spectroscopic analysis device 1k includes members similar to those in the spectroscopic analysis device 1i of Embodiment 5. However, the spectroscopic analysis device 1k is different mainly in the following points from the spectroscopic analysis device 1i of Embodiment 5.

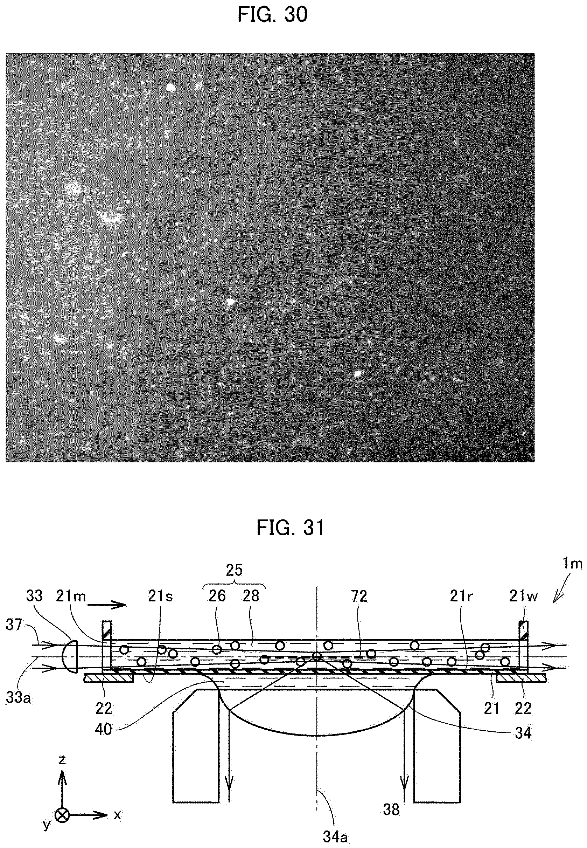

In the spectroscopic analysis device 1k, a plurality of molecules 26 are contained in a gel 28d. A container (21, 21w, and 23) is made of a sample supporting part 21, a side wall(s) 21w, and wall(s) 23. The container (21, 21w, and 23) is made of, for example, a gel. The container (21, 21w, and 23) includes a plurality of wells 24. The plurality of wells 24 each contain a plurality of molecules 26 and a gel 28d. The container (21, 21w, and 23) is supported by a sample stage 22. The sample stage 22 is configured to be movable in a first direction (x direction) and a third direction (z direction). Fig. 30 shows, as an example, an image of a sample 25d, which image is obtained by the spectroscopic analysis device 1k. In the sample 25d, an antibody (anti-mouse IgG (H+L) antibody) labeled with a fluorescent pigment (Alexa 647) is encapsulated in gellan gum gel. In the spectroscopic analysis device 1k, the plurality of molecules 26 can be contained in a liquid 28 in place of the gel 28d.

The spectroscopic analysis device 1k and the spectroscopic analysis method of Embodiment 6 yield the following effects in addition to the effects yielded by the spectroscopic analysis device 1i and the spectroscopic analysis method of Embodiment 5. In the spectroscopic analysis device 1k and the spectroscopic analysis method of Embodiment 6, it is not necessary to use a cover glass or a petri dish as the sample supporting part 21.

### (Embodiment 7)

The following will discuss a spectroscopic analysis device 1m in accordance with Embodiment 7, with reference to Fig. 31. The spectroscopic analysis device 1m includes members similar to those in the spectroscopic analysis device 1 of Embodiment 1, and yields effects similar to those of the spectroscopic analysis device 1 of Embodiment 1. However, the spectroscopic analysis device 1m is different mainly in the following points from the spectroscopic analysis device 1 of Embodiment 1.

A side wall 21w is provided with a transparent window 21m. An irradiation objective lens 33 is provided outside the container (21 and 21w). The irradiation objective lens 33 can be opposed to the transparent window 21m. The irradiation objective lens 33 can be provided on a same side as a sample 25 with respect to a sample supporting part 21. The irradiation objective lens 33 can be provided at a position above the sample supporting part 21. The irradiation objective lens 33 has a first optical axis 33a which extends along a first main surface 21r of the sample supporting part 21. The first optical axis 33a of the irradiation objective lens 33 can be perpendicular to a second optical axis 34a of an observation objective lens 34. The observation objective lens 34 is opposed to a second main surface 21s of the sample supporting part 21. The second optical axis 34a of the observation objective lens 34 can be perpendicular to the first main surface 21r.

Sheet light 37 travels along the first main surface 21r of the sample supporting part 21. The sample 25 is irradiated with the sheet light 37 which has passed through the irradiation objective lens 33 and the transparent window 21m. The observation objective lens 34 transmits emission light 38, which is emitted from the plurality of molecules 26, toward an imaging section (not illustrated).

### (Embodiment 8)

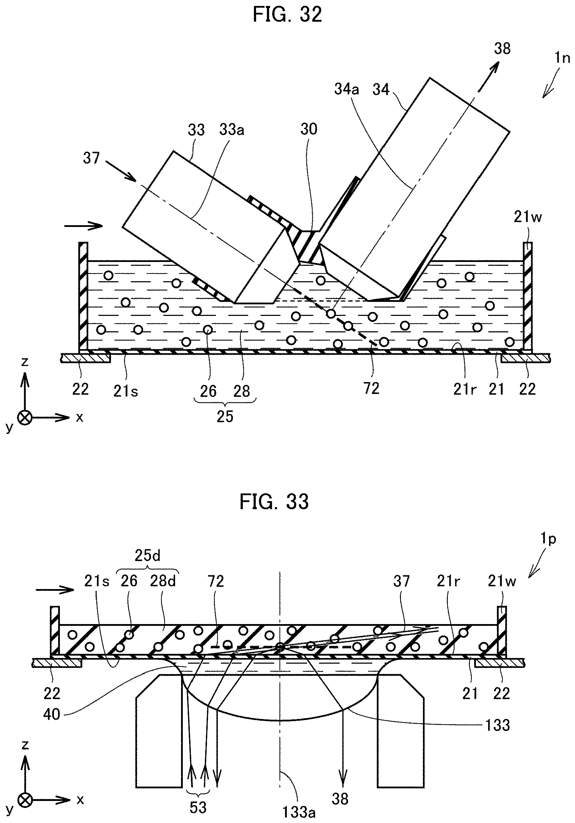

The following will discuss a spectroscopic analysis device 1n in accordance with Embodiment 8, with reference to Fig. 32. The spectroscopic analysis device 1n includes members similar to those in the spectroscopic analysis device 1 of Embodiment 1, and yields effects similar to those of the spectroscopic analysis device 1 of Embodiment 1. However, the spectroscopic analysis device 1n is different mainly in the following points from the spectroscopic analysis device 1 of Embodiment 1.

An irradiation objective lens 33 and an observation objective lens 34 are provided on a side of a sample supporting part 21 on which side a sample 25 is present. Part of the irradiation objective lens 33 and part of the observation objective lens 34 are immersed in a liquid 28. No refractive index matching liquid 40 is provided.

### (Embodiment 9)

The following will discuss a spectroscopic analysis device 1p in accordance with Embodiment 9, with reference to Fig. 33. The spectroscopic analysis device 1p includes members similar to those in the spectroscopic analysis device 1 of Embodiment 1, and yields effects similar to those of the spectroscopic analysis device 1 of Embodiment 1. However, the spectroscopic analysis device 1p is different mainly in the following points from the spectroscopic analysis device 1 of Embodiment 1.

The spectroscopic analysis device 1p includes a highly inclined laminated optical sheet (HILO) system which allows for imaging of a plurality of molecules 26 at a single-molecule level. Specifically, the spectroscopic analysis device 1p includes a lens 133, in place of the irradiation objective lens 33 and the observation objective lens 34 of Embodiment 1. The lens 133 has an optical axis 133a perpendicular to a first main surface 21r of a sample supporting part 21. The lens 133 has a function of the irradiation objective lens 33 of Embodiment 1 and a function of the observation objective lens 34 of Embodiment 1. The spectroscopic analysis device 1p does not include an optical system (e.g., a beam shape transforming section 62 (Fig. 1)) which transforms input light 53 into sheet light 37.

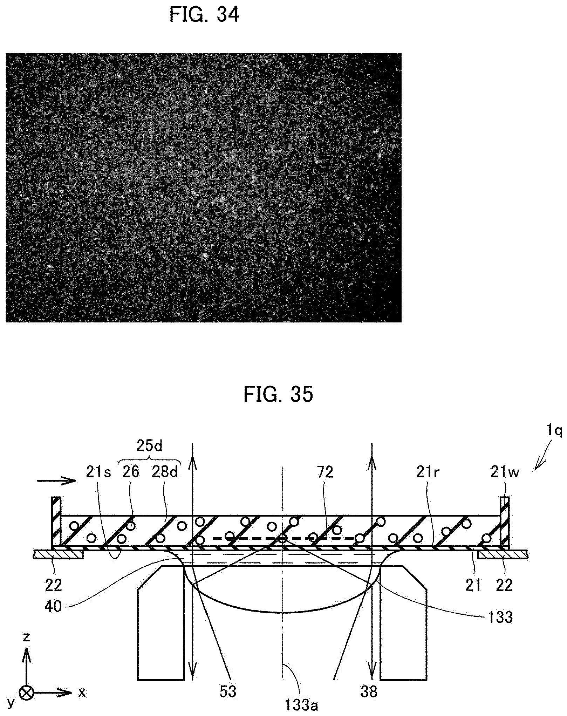

The input light 53 is incident on an edge of the lens 133. The input light 53 is refracted by the lens 133. The input light 53 is refracted at a first main surface 21r of the sample supporting part 21. The input light 53 is transformed into the sheet light 37. The sheet light 37 travels in a sample 25d, at an angle of, for example, not less than 75° and less than 90° with respect to the optical axis 133a of the lens 133. The lens 133 transmits emission light 38, which is emitted from the plurality of molecules 26, toward an imaging section (not illustrated). Fig. 34 shows, as an example, an image of the sample 25d, which image is obtained by the spectroscopic analysis device 1p. In the sample 25d, an antibody (anti-mouse IgG (H+L) antibody) labeled with a fluorescent pigment (Alexa 647) is encapsulated in gellan gum gel. In the spectroscopic analysis device 1p, the plurality of molecules 26 can be contained in a liquid 28 in place of a gel 28d.

### (Embodiment 10)

The following will discuss a spectroscopic analysis device 1q in accordance with Embodiment 10, with reference to Fig. 35. The spectroscopic analysis device 1q includes members similar to those in the spectroscopic analysis device 1p of Embodiment 9, and yields effects similar to those of the spectroscopic analysis device 1p of Embodiment 9. However, the spectroscopic analysis device 1q is different mainly in the following points from the spectroscopic analysis device 1p of Embodiment 9.

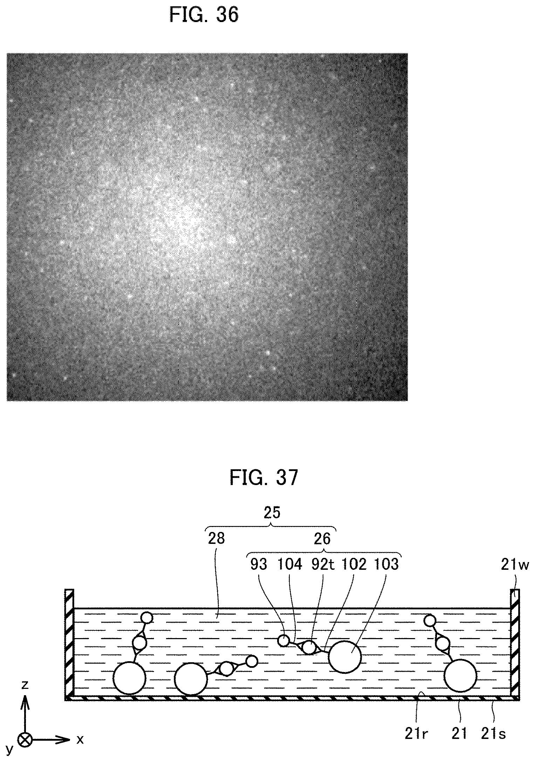

The spectroscopic analysis device 1q includes a wide-field illumination optical system in place of a highly inclined laminated optical sheet (HILO) system. Input light 53 travels along an optical axis 133a of a lens 133. The input light 53 is collimated by the lens 133. The input light 53 travels in a sample 25d along the optical axis 133a of the lens 133. The lens 133 transmits emission light 38, which is emitted from the plurality of molecules 26, toward an imaging section (not illustrated). Fig. 36 shows, as an example, an image of the sample 25d, which image is obtained by the spectroscopic analysis device 1q. In the sample 25d, an antibody (anti-mouse IgG (H+L) antibody) labeled with a fluorescent pigment (Alexa 647) is encapsulated in gellan gum gel. In the spectroscopic analysis device 1q, the plurality of molecules 26 can be contained in a liquid 28 in place of a gel 28d.

### (Example Application 1)

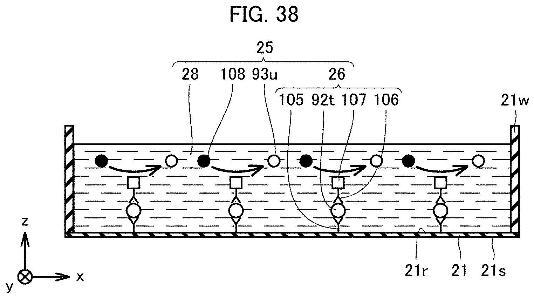

The spectroscopic analysis devices 1, 1f, 1g, 1h, 1i, 1k, 1m, 1n, 1p, and 1q and the spectroscopic analysis methods disclosed in the present specification can be applied to detection of a protein by use of a fluorescent antibody (FA) technique (see Fig. 37), a fluorescence enzyme immunoassay (FEIA, see Fig. 38), or a fluorescent aptamer. There exist no exponential amplification methods, such as a PCR method, for proteins. It is difficult to amplify an intensity of fluorescence which is emitted from a fluorescent substance with which a minute amount of protein is labeled. On the other hand, the spectroscopic analysis devices 1, 1f, 1g, 1h, 1i, 1k, 1m, 1n, 1p, and 1q and the spectroscopic analysis methods disclosed in the present specification allow for imaging of a plurality of molecules 26, which are contained in a sample 25, at a single-molecule level. This makes it possible to accurately measure a concentration of a protein without the need for amplification of the protein even in a case where the concentration of a protein is very low.

Fig. 37 shows an example of the fluorescent antibody technique. In Fig. 37, a bead 103 is modified with an antibody 102. The bead 103 binds to a protein 92t via the antibody 102. A fluorescent antibody (93 and 104) binds to the protein 92t. The fluorescent antibody (93 and 104) is an antibody 104 which is modified with a first fluorescent substance 93. With use of the spectroscopic analysis devices 1, 1f, 1g, 1h, 1i, 1k, 1m, 1n, 1p, and 1q and the spectroscopic analysis methods disclosed in the present specification, emission light (fluorescence) from the first fluorescent substance 93 is detected. Then, the protein 92t can be imaged at the single-molecule level. Accordingly, it is possible to accurately measure a concentration of the protein 92t.

The bead 103 makes it possible to easily remove impurities in centrifugal separation of the sample 25. The bead 103 allows for clear imaging of the protein 92t at the single-molecule level, by reducing a rate of diffusion of the protein 92t in a liquid 28. The fluorescent antibody technique includes not only a direct fluorescent antibody technique but also an indirect fluorescent antibody (IFA) technique or an indirect immunofluorescent (IIF) technique. Meanwhile, in the fluorescent antibody technique, it is not always necessary to use the bead 103 and the antibody 102.

Fig. 38 shows an example of the fluorescence enzyme immunoassay (FEIA). In Fig. 38, an antibody 105 is bound to a sample supporting part 21. The protein 92t is bound to the antibody 105. An antibody 106 modified with an enzyme 107 is bound to the protein 92t. The liquid 28 contains a substrate 108. The substrate 108 does not emit fluorescence. The enzyme 107 transforms the substrate 108 into a fluorescent substrate 93u. With use of the spectroscopic analysis devices 1, 1f, 1g, 1h, 1i, 1k, 1m, 1n, 1p, and 1q and the spectroscopic analysis methods disclosed in the present specification, emission light (fluorescence) from the fluorescent substrate 93u is detected. Then, the protein 92t can be imaged at the single-molecule level. Accordingly, it is possible to accurately measure the concentration of the protein 92t.

### (Example Application 2)

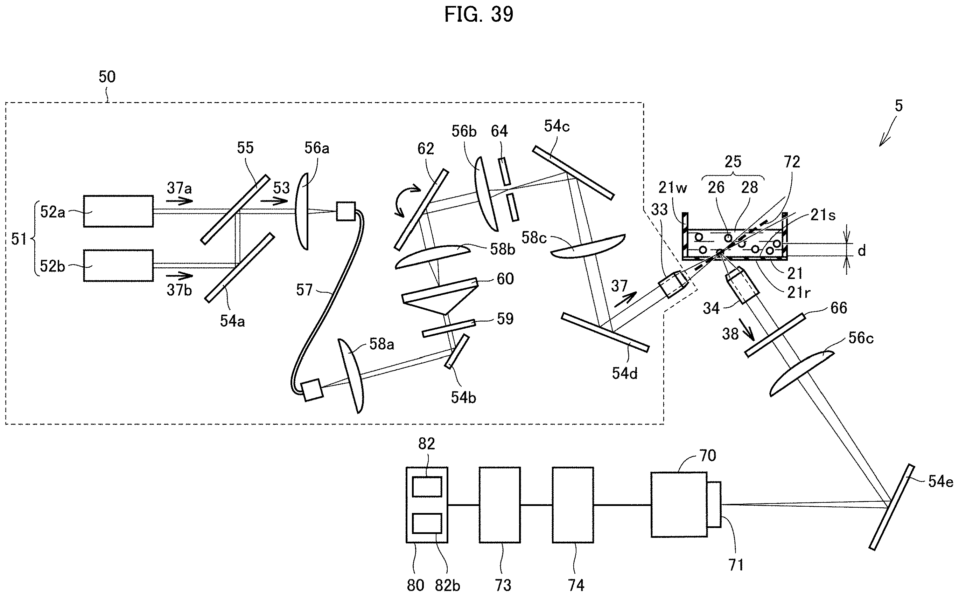

Fig. 39 shows an example in which the spectroscopic analysis device 1 of Embodiment 1 is applied to a correlation spectroscopy device 5, such as a fluorescence correlation spectroscopy (FCS) device or a Raman correlation spectroscopy device. The spectroscopic analysis devices 1f, 1g, 1h, 1i, 1k, 1m, 1n, 1p, and 1q disclosed in the present specification can also be applied to the correlation spectroscopy device. The spectroscopic analysis methods disclosed in the present specification can be applied to a correlation spectroscopy, such as a fluorescence correlation spectroscopy or a Raman correlation spectroscopy. In the fluorescence correlation spectroscopy, emission light 38 is fluorescence. In the Raman correlation spectroscopy, the emission light 38 is Raman scattered light.

In the correlation spectroscopy device 5, an analyzing section 80 includes an autocorrelator 82b The autocorrelator 82b can be, for example, a digital correlator. The autocorrelator 82b is configured to be capable of calculating a temporal fluctuation of number of a plurality of molecules 26 which are contained in at least one partial region of a sample 25. Further, it is possible to obtain, from the temporal fluctuation of the number of the plurality of molecules 26, at least one of information on a size of the plurality of molecules 26 (e.g., molecular weight), information on an environment surrounding the plurality of molecules 26 (e.g., viscosity), and information on the number of the plurality of molecules 26.

### (Example Application 3)

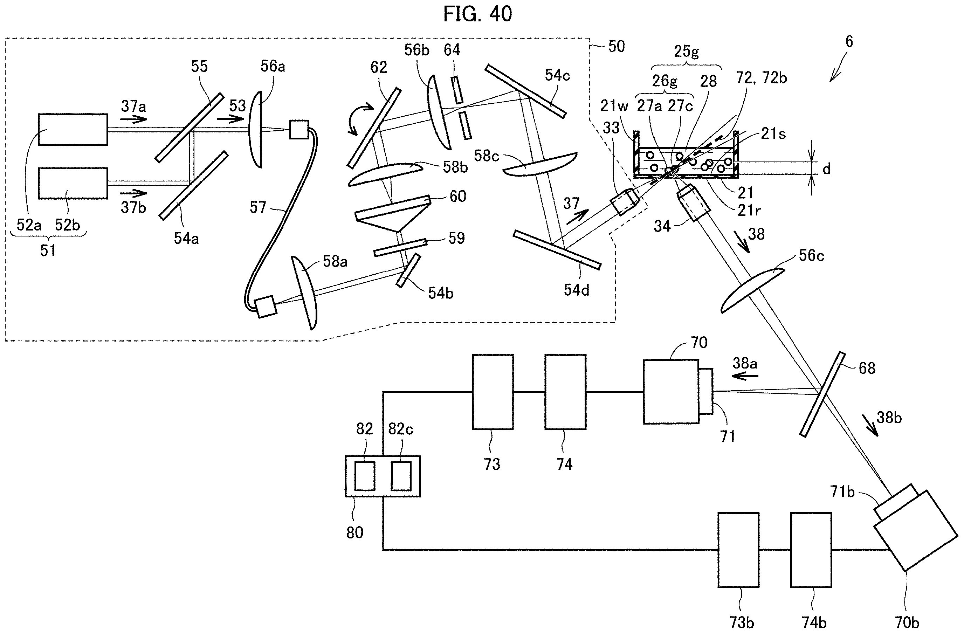

Fig. 40 shows an example in which the spectroscopic analysis device 1g of Embodiment 3 is applied to a cross-correlation spectroscopy device 6, such as a fluorescence cross-correlation spectroscopy (FCCS) device or a Raman cross-correlation spectroscopy device. The spectroscopic analysis method of Embodiment 3 can be applied to a cross-correlation spectroscopy, such as a fluorescence cross-correlation spectroscopy or a Raman cross-correlation spectroscopy. In the fluorescence cross-correlation spectroscopy, emission light 38 is fluorescence. In the Raman cross-correlation spectroscopy, the emission light 38 is Raman scattered light.

In the cross-correlation spectroscopy device 6, an analyzing section 80 includes a cross-correlator 82c. The cross-correlator 82c can be, for example, a digital correlator. The cross-correlator 82c is configured to be capable of calculating a synchronicity of a temporal fluctuation of number of first molecules 27a and a temporal fluctuation of number of second molecules 27b, which first molecules 27a and second molecules 27b are contained in at least one partial region of a sample 25. It is possible to quantitatively determine an interaction between the first molecules 27a and the second molecules 27b, from the synchronicity of temporal fluctuations of the numbers of the first molecules 27a and the second molecules 27b. It is possible to calculate, for example, a dissociation constant in an antigen-antibody reaction.

### (Example Application 4)

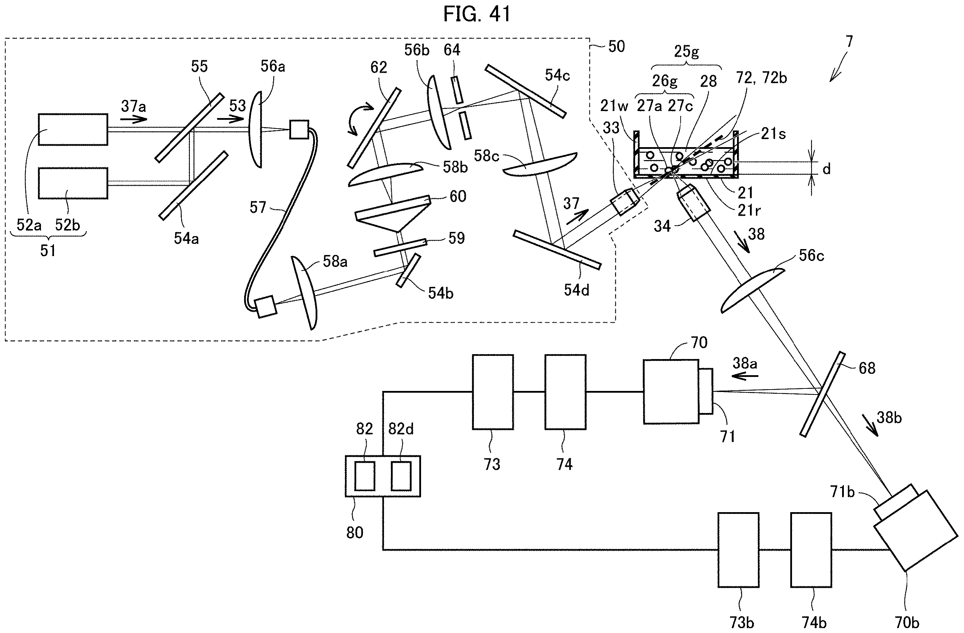

Fig. 41 shows an example in which the spectroscopic analysis device 1g of Embodiment 3 is applied to a fluorescence resonance energy transfer (FRET) measuring device 7. The spectroscopic analysis method of Embodiment 3 can be applied to a fluorescence resonance energy transfer (FRET) method.

A sample 25g includes a plurality of molecules 26g. In the fluorescence resonance energy transfer measuring device 7, only first input light 37a enters the sample 25g and second input light 37b does not enter the sample 25g. The plurality of molecules 26 contain a plurality of first molecules 27a and a plurality of second molecules 27c. The plurality of first molecules 27a can absorb sheet light 37. The plurality of second molecules 27c can receive energy, by fluorescence resonance energy transfer, from the plurality of first molecules 27a which have absorbed the sheet light 37.

In a case where a distance between the plurality of first molecules 27a and the plurality of second molecules 27c is small, the fluorescence resonance energy transfer from the plurality of first molecules 27a to the plurality of second molecules 27c occurs. As a result, the plurality of second molecules 27c receive energy from the plurality of first molecules 27a. The plurality of second molecules 27c emit second output light 38b. In contrast, in a case where a distance between the plurality of first molecules 27a and the plurality of second molecules 27c is large, the fluorescence resonance energy transfer from the plurality of first molecules 27a to the plurality of second molecules 27c does not occur. As a result, the plurality of second molecules 27c cannot receive energy from the plurality of first molecules 27a. The plurality of second molecules 27c do not emit the second output light 38b.

In the fluorescence resonance energy transfer measuring device 7, an analyzing section 80 includes an interaction index calculating section 82d. The interaction index calculating section 82d is configured to calculate an index indicating an interaction between the plurality of first molecules 27a and the plurality of second molecules 27c, from a first molecule image in which the plurality of first molecules 27a are imaged at a single-molecule level and a second molecule image in which the plurality of second molecules 27c are imaged at the single-molecule level.

In one example, the index can be a dissociation constant of a bond between the plurality of first molecules 27a and the plurality of second molecules 27c. In another example, the index can be a ratio of a plurality of first molecules 27a which is bound to the plurality of second molecules 27c with respect to all the plurality of first molecules 27a. In this way, the fluorescence resonance energy transfer measuring device 7 can quantitatively determine the interaction (e.g., bonding or dissociation) between the plurality of first molecules 27a and the plurality of second molecules 27b.

Embodiments 1 to 10 and Variations thereof disclosed in the present specification should be regarded as examples in all respects and should not be considered limitative. Unless contradictory, two or more of Embodiments 1 to 10 and Variations thereof can be combined. The scope of the present invention is defined by not the foregoing description but by Claims. The scope of the present invention is intended to include the scope of claims and equivalent meanings thereof, and also all modifications within the equivalent meanings of the scope of claims.

### Reference Signs List

1, 1f, 1g, 1h, 1i, 1k, 1m, 1n, 1p, 1q spectroscopic analysis device, 5 correlation spectroscopy device, 6 cross-correlation spectroscopy device, 7 fluorescence resonance energy transfer measuring device. 10 base, 11 guide rail, 12 x-y stage, 13 block, 14 coarse motion stage, 15 first plate member, 16 fine motion stage, 17 second plate member, 18 leg member, 19 moving section, 19m motor, 19n ball screw, 19p flow generating section, 21, 21c sample supporting part, 21m transparent window, 21r first main surface, 21s second main surface, 21w side wall, 22 sample stage, 23 wall, 24 well, 25, 25d, 25e, 25f, 25g, 25h sample, 26, 26f, 26g, 26h, 98a, 98b, 98c, 98d molecule, 27a first molecule, 27b, 27c second molecule, 28 liquid, 28d gel, 28e membrane, 29p first end, 29q second end, 30 lens holder, 30a aperture, 30h injection port, 30t top portion, 31 liquid retaining section, 33 irradiation objective lens, 33a first optical axis, 34 observation objective lens, 34a second optical axis, 35 first arm, 37 sheet light, 37a first input light, 37b second input light, 38 emission light, 38a first output light, 38b second output light, 40 refractive index matching liquid, 42 tube, 45 illuminating light source, 47 condenser lens, 48 second arm, 49 third arm, 50 optical unit, 51 light source, 52a first light source element, 52b second light source element, 53 input light, 54a, 54b, 54c, 54d, 54e, 54f mirror, 55 optical multiplexer, 56a, 56b, 56c condensing lens, 57 optical fiber, 58a, 58b, 58c collimating lens, 59 annular zone phase element, 60 axicon lens, 62 beam shape transforming section, 64 aperture, 66 filter wheel, 66p rotating plate, 67, 67b filter, 68 color separation mirror, 70, 70b imaging section, 71, 71b imaging plane, 72, 72b conjugate plane, 73, 73b image processing section, 74, 74b low-pass filter, 80 analyzing section, 82 counting section, 82b autocorrelator, 82c cross-correlator, 82d interaction index calculating section, 85 input section, 86 output section, 87 control section, 87p computing section, 88 storage section, 90 nucleic acid sequence, 91 oligo-DNA, 92 first biological molecule, 92b second biological molecule, 92t protein, 93 first fluorescent substance, 93b second fluorescent substance, 93u fluorescent substrate, 96a, 96b, 96c, 96d sample mounting portion, 96m marker mounting portion, 97a, 97b, 97c, 97d molecular weight marker, 100 cell, 101 nucleus, 102, 104, 105, 106 antibody, 103 bead, 107 enzyme, 108 substrate, 133 lens, 133a optical axis

## Claims

1. A spectroscopic analysis device comprising:
an imaging section configured to be capable of imaging a plurality of molecules at a single-molecule level by detecting emission light which is emitted from the plurality of molecules contained in a sample;
an optical scanning section configured to be capable of relatively moving a conjugate plane of an imaging plane of the imaging section to scan at least one partial region of the sample; and
an analyzing section configured to be capable of obtaining a concentration of the plurality of molecules by analyzing an image of the plurality of molecules, the image having been obtained by the imaging section.

2. The spectroscopic analysis device as set forth in claim 1, wherein:
the at least one partial region of the sample includes a region of the sample which region is located at a distance of not less than 500 nm from a sample supporting surface of a sample supporting part supporting the sample.

3. The spectroscopic analysis device as set forth in claim 1 or 2, wherein:
the at least one partial region of the sample has a volume of not less than 0.1 µL.

4. The spectroscopic analysis device as set forth in any one of claims 1 to 3, wherein:
the analyzing section includes a counting section configured to be capable of counting a number of the plurality of molecules contained in the image.

5. The spectroscopic analysis device as set forth in any one of claims 1 to 4, wherein:
the emission light is fluorescence or scattered light.

6. The spectroscopic analysis device as set forth in claim 1, wherein:
the sample is supported by a sample supporting part which is a multi-well plate including a plurality of wells; and
the sample is contained in the plurality of wells.

7. The spectroscopic analysis device as set forth in claim 1, further comprising:
an observation objective lens arranged so as to be capable of transmitting the emission light toward the imaging section,
the conjugate plane of the imaging plane being an observation plane of the observation objective lens.

8. The spectroscopic analysis device as set forth in claim 7, further comprising:
an optical unit configured to be capable of emitting sheet light toward the sample,
the sheet light traveling in a direction substantially parallel to the conjugate plane of the imaging plane.

9. The spectroscopic analysis device as set forth in claim 8, wherein:
the optical unit includes an axicon lens.

10. The spectroscopic analysis device as set forth in claim 8 or 9, wherein:
the observation objective lens and the optical unit are provided on a side opposite to the sample with respect to a sample supporting part.

11. The spectroscopic analysis device as set forth in claim 10, further comprising
a lens holder,
the optical unit including an irradiation objective lens arranged so as to be capable of transmitting the sheet light toward the sample,
the lens holder holding the observation objective lens and the irradiation objective lens so that a relative position of the observation objective lens with respect to the irradiation objective lens is fixed.

12. The spectroscopic analysis device as set forth in claim 11, wherein:
the lens holder includes a liquid retaining section; and
the liquid retaining section is configured to be capable of retaining a refractive index matching liquid which fills a space formed by the observation objective lens, the irradiation objective lens, and the sample supporting part.

13. The spectroscopic analysis device as set forth in any one of claims 1 to 12, wherein:
the plurality of molecules include a plurality of first molecules and a plurality of second molecules different from the plurality of first molecules;
the plurality of first molecules are each capable of emitting first output light;
the plurality of second molecules are each capable of emitting second output light;
the emission light contains the first output light and the second output light, the first output light being different in at least one of luminance, wavelength, and polarization from the second output light;
the image of the plurality of molecules includes a first molecule image in which the plurality of first molecules are imaged at the single-molecule level and a second molecule image in which the plurality of second molecules are imaged at the single-molecule level;
the first molecule image is formed by the first output light;
the second molecule image is formed by the second output light; and
the analyzing section is configured to be capable of individually obtaining a first concentration of the plurality of first molecules and a second concentration of the plurality of second molecules, on a basis of a difference in the at least one of the luminance, the wavelength, and the polarization between the first output light and the second output light.

14. The spectroscopic analysis device as set forth in any one of claims 1 to 12, wherein:
the plurality of molecules are each capable of emitting first output light and second output light;
the emission light contains the first output light and the second output light, the first output light being different in wavelength from the second output light; and
the image of the plurality of molecules is formed by the first output light and the second output light.

15. A spectroscopic analysis method comprising the steps of:
a) obtaining an image of a plurality of molecules, by imaging the plurality of molecules at a single-molecule level concurrently with relatively moving a conjugate plane of an imaging plane of an imaging section to scan at least one partial region of a sample containing the plurality of molecules; and
b) obtaining a concentration of the plurality of molecules by analyzing the image of the plurality of molecules.

16. The method as set forth in claim 15, wherein:
the plurality of molecules include a plurality of first molecules and a plurality of second molecules different from the plurality of first molecules;
the plurality of first molecules are each capable of emitting first output light;
the plurality of second molecules are each capable of emitting second output light;
the image of the plurality of molecules includes a first molecule image in which the plurality of first molecules are imaged at the single-molecule level and a second molecule image in which the plurality of second molecules are imaged at the single-molecule level;
the first molecule image is formed by the first output light;
the second molecule image is formed by the second output light; and
the step b) of obtaining the concentration of the plurality of molecules includes individually obtaining a first concentration of the plurality of first molecules and a second concentration of the plurality of second molecules, on a basis of a difference in at least one of luminance, wavelength, and polarization between the first output light and the second output light.

17. A program to be executed by a computer, the program causing the computer to carry out the spectroscopic analysis method as set forth in claim 15 or 16.

18. A computer-readable storage medium storing therein the program as set forth in claim 17.

19. A microscope comprising:
an observation objective lens arranged so as to be capable of transmitting emission light which is emitted from a plurality of molecules contained in a sample supported by a sample supporting part;
an irradiation objective lens arranged so as to be capable of transmitting sheet light toward the sample;
a lens holder configured to be capable of holding the observation objective lens and the irradiation objective lens, the lens holder fixing a relative position of the observation objective lens with respect to the irradiation objective lens; and
an optical scanning section configured to be capable of relatively moving an observation plane of the observation objective lens to scan at least one partial region of the sample, in a first direction and a second direction which intersect with each other and in each of which a sample supporting surface of the sample supporting part extends,
the observation objective lens and the irradiation objective lens being provided on a side opposite to the sample with respect to the sample supporting part,
the lens holder including a liquid retaining section,
the liquid retaining section being configured to be capable of retaining a refractive index matching liquid which fills a space formed by the observation objective lens, the irradiation objective lens, and the sample supporting part.
